(19) Europäisches Patentamt
European Patent Office
Office européen des brevets

(11) EP 4 787 879 A1

(12) **EUROPEAN PATENT APPLICATION**
published in accordance with Art. 153(4) EPC

(43) Date of publication:
**05.08.2026 Bulletin 2026/32**

(21) Application number: **24871830.6**

(22) Date of filing: **10.09.2024**

(51) International Patent Classification (IPC):
***H04N 23/55*** *(2023.01)* ***G01N 21/17*** *(2006.01)*
***G02B 5/30*** *(2006.01)*

(52) Cooperative Patent Classification (CPC):
**G01N 21/17; G02B 5/30; H04N 23/55**

(86) International application number:
**PCT/JP2024/032347**

(87) International publication number:
**WO 2025/070033 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 JP 2023163069**

(71) Applicant: **FUJIFILM Corporation**
**Tokyo 106-8620 (JP)**

(72) Inventors:
- **HIMENO, Ryoji**
**Kanagawa 250-0193 (JP)**
- **KISHINE, Yasunobu**
**Kanagawa 250-0193 (JP)**
- **HIRAI, Yuki**
**Kanagawa 250-0193 (JP)**

(74) Representative: **Dehns Germany Partnerschaft mbB**
**Theresienstraße 6-8**
**80333 München (DE)**

(54) **IMAGING SYSTEM**

(57) Provided is an imaging system which obtains a captured image with reduced noise. The imaging system includes a light source which emits infrared rays, an imaging device which images a target object irradiated with the infrared rays emitted from the light source, and a first polarizing filter which is provided between the light source and the target object and polarizes the infrared rays emitted from the light source. The imaging device includes, from an incidence side, a lens, a second polarizing filter which polarizes the infrared rays, and an image sensor.

FIG. 1

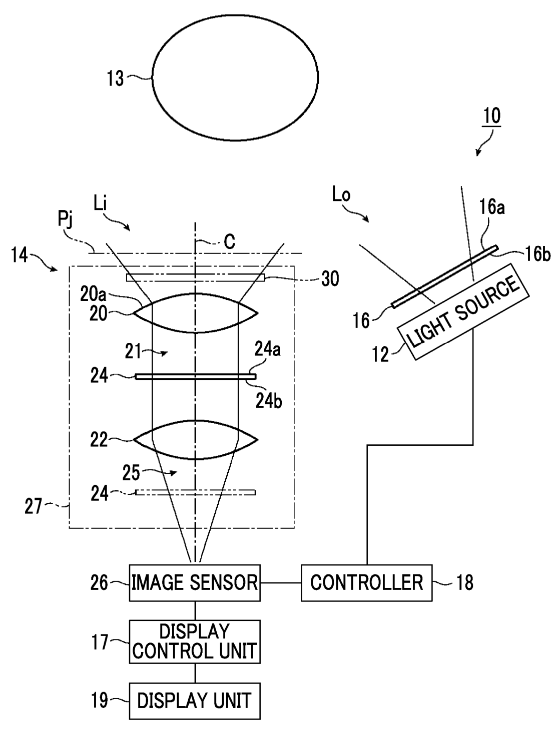


EP 4 787 879 A1

## Description

## BACKGROUND OF THE INVENTION

1. Field of the Invention

The present invention relates to an imaging system which images a target object using infrared rays, particularly to an imaging system including a polarizing filter which polarizes the infrared rays.

2. Description of the Related Art

In recent years, from the viewpoint of multifunctionalization and space saving of an apparatus, an apparatus which uses a device for visible light, such as a display element for displaying an image and a visible light imaging element used for visible light imaging, and an infrared light sensing system in combination has been developed.

For example, JP2022-123858A discloses an imaging system for imaging a scene, the imaging system including: a camera including an image sensor which captures an image of the scene in both a visible wavelength range and an infrared wavelength range; at least one light source which is configured to emit rays for selectively illuminating the scene with infrared radiation between image captures by the camera; and an electrically controllable filter which is configured to transmit infrared wavelength light to the image sensor and to either selectively transmit or filter visible light to the image sensor based on a control signal. The electrically controllable filter includes a polarizing filter.

## SUMMARY OF THE INVENTION

The imaging system of JP2022-123858A includes a polarizing filter, but the captured image includes noise, and reduction of the noise is desired.

An object of the present invention is to provide an imaging system which obtains a captured image with reduced noise.

In order to achieve the above-described object, an invention [1] is an imaging system including a light source which emits infrared rays, an imaging device which images a target object irradiated with the infrared rays emitted from the light source, and a first polarizing filter which is provided between the light source and the target object and polarizes the infrared rays emitted from the light source, in which the imaging device includes, from an incidence side, a lens, a second polarizing filter which polarizes the infrared rays, and an image sensor.

An invention [2] is the imaging system according to the invention [1], in which the first polarizing filter includes a first linear polarizer, the second polarizing filter includes a second linear polarizer, and a polarization axis of the first linear polarizer and a polarization axis of the second linear polarizer are orthogonal to each other.

An invention [3] is the imaging system according to the invention [1] or [2], in which the second linear polarizer is an absorption type linear polarizer.

An invention [4] is the imaging system according to the invention [2] or [3], in which the second linear polarizer has an average transmittance of visible light of 70% or more.

An invention [5] is the imaging system according to the invention [1] or [4], in which the second polarizing filter is an optical element which has an absorption axis with respect to infrared rays in an in-plane direction, in which, in a case where linearly polarized light of the infrared rays orthogonal to the absorption axis is irradiated from a normal direction of the optical element and from a direction tilted by 45° from the normal direction at an azimuthal angle orthogonal to the absorption axis, an absorbance in a case of being irradiated from the direction tilted by 45° from the normal direction is larger than an absorbance in a case of being irradiated from the normal direction.

An invention [6] is the imaging system according to any one of the inventions [1] to [5], in which the second polarizing filter has a haze of 1 or less.

An invention [7] is the imaging system according to any one of the inventions [1] to [6], in which the target object is at least one of a driver of a vehicle or a passenger of the vehicle, and the imaging system is used for an in-vehicle occupant monitoring system.

An invention [8] is an imaging system including a light source which emits infrared rays, an imaging device which images a target object irradiated with the infrared rays emitted from the light source, and a first polarizing filter which is provided between the light source and the target object and polarizes the infrared rays emitted from the light source, in which the imaging device includes, from an incidence side, a lens, a second polarizing filter which polarizes the infrared rays, and an image sensor, and the second polarizing filter is an optical element which has an absorption axis with respect to infrared rays in an in-plane direction, in which, in a case where linearly polarized light of the infrared rays orthogonal to the absorption axis is irradiated from a normal direction of the optical element and from a direction tilted by 45° from the normal direction at an azimuthal angle orthogonal to the absorption axis, an absorbance in a case of being irradiated from

the direction tilted by 45° from the normal direction is larger than an absorbance in a case of being irradiated from the normal direction.

An invention [9] is an imaging system including a light source which emits infrared rays, an imaging device which images a target object irradiated with the infrared rays emitted from the light source, and a first circular polarizing filter which is provided between the light source and the target object and circularly polarizes the infrared rays emitted from the light source, in which the imaging device includes, from an incidence side, a second circular polarizing filter which circularly polarizes the infrared rays, a lens, and an image sensor.

An invention [10] is the imaging system according to [9], in which the second circular polarizing filter includes a linear polarizer and a λ/4 plate, and an Nz factor of the λ/4 plate is more than 0 and less than 1.

An invention [11] is the imaging system according to the invention [10], in which the linear polarizer of the second circular polarizing filter is an absorption type linear polarizer.

An invention [12] is the imaging system according to the invention [10] or [11], in which the linear polarizer of the second circular polarizing filter has an average transmittance of visible light of 70% or more.

An invention [13] is the imaging system according to the invention [9], in which the second polarizing filter has a haze of 1 or less.

According to the present invention, it is possible to provide an imaging system which obtains a captured image with reduced noise.

## BRIEF DESCRIPTION OF THE DRAWINGS

FIG. 1 is a schematic view showing a first example of the imaging system according to the embodiment of the present invention.

FIG. 2 is a schematic view showing polarization axes of a first polarizing filter and a second polarizing filter in the first example of the imaging system according to the embodiment of the present invention.

FIG. 3 is a side view showing another example of the second polarizing filter in the imaging system according to the embodiment of the present invention.

FIG. 4 is a plan view showing a first layer of another example of the second polarizing filter in the imaging system according to the embodiment of the present invention.

FIG. 5 is a schematic cross-sectional view showing the first layer of another example of the second polarizing filter in the imaging system according to the embodiment of the present invention.

FIG. 6 is a plan view showing a second layer of another example of the second polarizing filter in the imaging system according to the embodiment of the present invention.

FIG. 7 is a schematic cross-sectional view showing the second layer of another example of the second polarizing filter in the imaging system according to the embodiment of the present invention.

FIG. 8 is a schematic perspective view for describing a state, with respect to another example of the second polarizing filter in the imaging system according to the embodiment of the present invention, in a case where linearly polarized infrared light which is orthogonal to an absorption axis for infrared rays existing in an in-plane direction is irradiated from a normal direction of an optical element and from a direction tilted by 45° from the normal direction at an azimuth angle orthogonal to the absorption axis.

FIG. 9 is a schematic view for describing a mechanism in which an S/N ratio is improved in another example of the second polarizing filter in the imaging system according to the embodiment of the present invention.

FIG. 10 is a plan view showing still another example of the second polarizing filter in the imaging system according to the embodiment of the present invention.

FIG. 11 is a cross-sectional view showing still another example of the second polarizing filter in the imaging system according to the embodiment of the present invention.

FIG. 12 is a schematic perspective view for describing a state, with respect to still another example of the second polarizing filter in the imaging system according to the embodiment of the present invention, in a case where linearly polarized infrared light which is orthogonal to an absorption axis for infrared rays existing in an in-plane direction is irradiated from a normal direction of an optical element and from a direction tilted by 45° from the normal direction at an azimuth angle orthogonal to the absorption axis.

FIG. 13 is a schematic view for describing a mechanism in which an S/N ratio is improved in still another example of the second polarizing filter in the imaging system according to the embodiment of the present invention.

FIG. 14 is a schematic view showing a second example of the imaging system according to the embodiment of the present invention.

FIG. 15 is a schematic view showing an example of an in-vehicle occupant monitoring system in which the imaging system according to the embodiment of the present invention is used.

FIG. 16 is a schematic view showing an example of a configuration of the in-vehicle occupant monitoring system.
FIG. 17 is a schematic view showing an imaging system used in Examples.

## DESCRIPTION OF THE PREFERRED EMBODIMENTS

Hereinafter, the imaging system according to the embodiment of the present invention will be described in detail based on suitable embodiments shown in the accompanying drawings.
The drawings described below are exemplary for explaining the present invention, and the present invention is not limited to the drawings illustrated below.
In the following, "to" indicating the numerical range includes numerical values described on both sides. For example, in a case where $\varepsilon$ is a numerical value $\varepsilon_\alpha$ to a numerical value $\varepsilon_\beta$, the range of $\varepsilon$ is a range including the numerical value $\varepsilon_\alpha$ and the numerical value $\varepsilon_\beta$, and in mathematical symbols, $\varepsilon_\alpha \leq \varepsilon \leq \varepsilon_\beta$.
Unless otherwise specified, "parallel" includes an error range generally allowed in the relevant technical field.
In addition, unless otherwise specified, "angle", "temperature", and "time" also include an error range generally allowed in the relevant technical field.
In addition, "visible light" is intended to refer to light having a wavelength of 400 nm or more and less than 700 nm.
"Infrared ray" is intended to refer to light having a wavelength of 700 nm or more and less than 2,500 nm.
"Ultraviolet ray" is intended to refer to light having a wavelength of 10 nm or more and less than 400 nm.

[First example of imaging system]

FIG. 1 is a schematic view showing a first example of the imaging system according to the embodiment of the present invention.
An imaging system 10 shown in FIG. 1 includes a light source 12 which emits infrared rays, an imaging device 14 which images a target object 13 irradiated with the infrared rays emitted from the light source 12, and a first polarizing filter 16 which is provided between the light source 12 and the target object 13 and polarizes the infrared rays emitted from the light source 12.
The imaging device 14 includes, from an incidence side, a lens 20, a second polarizing filter 24 which polarizes the infrared rays, a lens 22, and an image sensor 26. The lens 20, the second polarizing filter 24, the lens 22, and the image sensor 26 are arranged to be spaced from each other in an optical axis direction.
An optical system 27 is configured by the two lenses 20 and 22 and the second polarizing filter 24.
The two lenses 20 and 22 are, for example, convex lenses. Therefore, light incident on the lens 20 is made into substantially parallel light between the lens 20 and the lens 22 in the optical axis direction. In addition, the lens 22 focuses the light on the image sensor 26. That is, the lens 22 forms an image of the light incident on the lens 22 on the image sensor 26. Therefore, a light-receiving surface (not shown) of the image sensor 26 is disposed at a focal position of the lens 22.
The imaging system 10 further includes a display control unit 17 connected to the image sensor 26, a controller 18, and a display unit 19.
The controller 18 controls the light source 12, the image sensor 26, and the display control unit 17. The controller 18 controls an amount of light of the light source 12 and an on/off state of the light source 12. In addition, the controller 18 controls an on/off state of the image sensor 26.
The image sensor 26 acquires an image signal carrying information on the target object 13 as described later, and the image signal constitutes a captured image. The display control unit 17 displays the captured image based on the image signal acquired by the image sensor 26 on the display unit 19. The controller 18 controls the display of the captured image on the display unit 19 by the display control unit 17.
The display unit 19 displays the image captured by the image sensor 26, and various known displays, for example, a liquid crystal display and an organic electroluminescence (EL) display are used.
The light source 12 emits infrared rays as an emitted light Lo. A configuration of the light source 12 is not particularly limited as long as it can emit the infrared rays. A light emitting element such as a light emitting diode (LED) and a laser diode (LD) is used as the light source 12.
The first polarizing filter 16 is disposed on an emission side of the light source 12. A surface of the first polarizing filter 16 on the light source 12 side is a back surface 16b, and a surface on the opposite side is a front surface 16a.
The first polarizing filter 16 may be disposed at any position between the light source 12 and the target object 13 as long as the first polarizing filter 16 can polarize the infrared rays emitted from the light source 12 as described above. In a case where the emitted light Lo from the light source 12 spreads, it is preferable to dispose the first polarizing filter 16 closer to the light source 12 between the light source 12 and the target object 13.
In the imaging device 14, for example, the two lenses 20 and 22 are arranged on an optical axis C so as to be spaced from each other in the optical axis direction. The second polarizing filter 24 is disposed between the lens 20 and the lens 22. The optical axis direction is a direction in which the optical axis C extends.

The polarized emitted light Lo is incident on the target object 13, and a reflected light Li reflected by the target object 13 is incident on the lens 20 on the incidence side. The reflected light Li is light carrying information on the target object 13.

Between the lens 20 and the lens 22, the reflected light Li incident on the lens 20 is made into substantially parallel light and is polarized by the second polarizing filter 24, and then the reflected light Li is focused by the lens 22 and is formed into an image on the light-receiving surface (not shown) of the image sensor 26. The image sensor 26 obtains the image signal carrying the information on the target object 13, and the image signal constitutes the captured image.

The image sensor 26 receives the above-described light carrying the information on the target object 13 on the light-receiving surface, and converts the light into an electric signal by photoelectric conversion to obtain the image signal carrying the information on the target object 13. As a result, the target object 13 is imaged.

The image sensor 26 has a photoelectric conversion function as described above, and includes, for example, a photoelectric conversion element known in the related art. As the image sensor 26, for example, a charge coupled device (CCD) type image sensor or a complementary metal oxide semiconductor (CMOS) image sensor can be used. In addition, it is preferable that the image sensor 26 has sensitivity in a visible light region in addition to the infrared rays. As a result, an image by the infrared rays and an image in the visible light region can be obtained.

The image signal carrying the information on the target object 13, which is obtained by the image sensor 26, is output to the display control unit 17 as described above, and is displayed on the display unit 19.

In the imaging system 10, the lens 20, the second polarizing filter 24 which polarizes the infrared rays, and the image sensor 26 are provided from the incidence side, so that the reflected light Li transmitted through the lens 20 is polarized by the second polarizing filter 24. Therefore, in the reflected light Li, light obliquely incident on the lens 20 is refracted in a case of passing through the lens 20, so that probability of being obliquely incident on the second polarizing filter 24 is reduced, and as a result, noise of the obtained captured image can be reduced, and the captured image with reduced noise can be obtained.

On the other hand, in a case where the second polarizing filter 24 is disposed at a position Pj between the lens 20 and the target object 13, for example, light of the reflected light Li at an angle deviating from the polarization axis of the second polarizing filter 24 (for example, the light obliquely incident on the second polarizing filter 24) passes through the second polarizing filter 24. As a result, light which should be shielded by the second polarizing filter 24 is obliquely incident on the lens 20. Noise occurs in the captured image due to the obliquely incident light.

On the other hand, in the imaging system, the occurrence of the noise which occurs in a case where the second polarizing filter 24 is disposed at the position Pj as described above is suppressed. The position Pj at which the second polarizing filter 24 is disposed is referred to as a target object side position.

In the imaging system 10, the second polarizing filter 24 is disposed between the two lenses 20 and 22 in the optical axis direction, but the present invention is not limited thereto. For example, the second polarizing filter 24 may be disposed between the image sensor 26 and the lens 22 facing the image sensor 26.

A position between the two lenses 20 and 22 in the optical axis direction is referred to as a pupil position. In addition, a position between the image sensor 26 and the lens 22 facing the image sensor 26 in the optical axis direction is referred to as an image side position.

In a case where the second polarizing filter 24 is disposed at the pupil position or the image side position, the pupil position is closer to parallel light, and thus the pupil position is preferred from the viewpoint of noise reduction. On the other hand, from the viewpoint of ease of disposing the second polarizing filter 24, the image side position is preferred to the pupil position.

In addition, in the imaging system 10 shown in FIG. 1, the imaging device 14 may have a configuration of including, from the incidence side, a second polarizing filter 30 which polarizes the infrared rays, the lens 20, and the image sensor 26, instead of the above-described second polarizing filter 24. In this case, the second polarizing filter 30 is disposed on an incidence surface 20a side of the lens 20 without providing the above-described second polarizing filter 24.

The second polarizing filter 30 is an optical element which has an absorption axis with respect to infrared rays in an in-plane direction, in which, in a case where linearly polarized light of the infrared rays orthogonal to the absorption axis is irradiated from a normal direction of the optical element and from a direction tilted by 45° from the normal direction at an azimuthal angle orthogonal to the absorption axis, an absorbance in a case of being irradiated from the direction tilted by 45° from the normal direction is larger than an absorbance in a case of being irradiated from the normal direction. The second polarizing filter 30 will be described later with reference to FIG. 8.

In addition, in the imaging system 10, the configuration of including the two lenses 20 and 22 is adopted, but the number of lenses is not limited to two. The lenses 20 and 22 are not limited to single lenses. For example, the lens 20 and the lens 22 may be each a lens group including a plurality of lenses, or a lens assembly including a plurality of lenses and an optical element or the like.

In a case of the lens group or the lens assembly, the second polarizing filter 24 is disposed between the lens group or the lens assembly and the lens group or the lens assembly in the optical axis direction.

In addition, the lens 20 and the lens 22 of the imaging system 10 can have a configuration of including a movable

lens which is movable along the optical axis and having an optical zooming function or a focusing function.

Next, the first polarizing filter 16 and the second polarizing filter 24 will be described.

FIG. 2 is a schematic view showing polarization axes of the first polarizing filter and the second polarizing filter of the first example in the imaging system according to the embodiment of the present invention.

FIG. 2 shows the first polarizing filter 16 and the second polarizing filter 24.

The first polarizing filter 16 includes, for example, a first linear polarizer 28. The first linear polarizer 28 has a polarization axis D1. In this case, the first polarizing filter 16 is a polarizing filter for linearly polarized light.

The second polarizing filter 24 includes a second linear polarizer 29. The second linear polarizer 29 has a polarization axis D2. In this case, the second polarizing filter 24 is a polarizing filter for linearly polarized light. Directions of the polarization axes D1 and D2 are directions of the linearly polarized light.

In a case where the first polarizing filter 16 includes the first linear polarizer 28 and the second polarizing filter 24 includes the second linear polarizer 29, although not shown, a configuration of including an optical compensation layer may be adopted.

As shown in FIG. 2, in a case where the first linear polarizer 28 and the second linear polarizer 29 are viewed from a back surface 16b of the first polarizing filter 16 on the light source 12 side and a back surface 24b of the second polarizing filter 24 on the image sensor 26 side, the polarization axis D1 of the first linear polarizer 28 and the polarization axis D2 of the second linear polarizer 29 are orthogonal to each other.

In this case, the infrared rays emitted from the light source 12 pass through the first linear polarizer 28 to be linearly polarized infrared rays, and the linearly polarized infrared rays, that is, the emitted light Lo is emitted to the target object 13. The linearly polarized infrared rays are reflected by the target object 13. The linearly polarized infrared rays reflected by the target object 13, that is, the reflected light Li passes through the lens 20, the second linear polarizer 29, and the lens 22 in this order, and is incident on the image sensor 26. In this case, in the second linear polarizer 29, linearly polarized light in the polarization axis D1 direction of the first linear polarizer 28 is shielded among the linearly polarized infrared rays reflected by the target object 13. Therefore, reflected light in which the linear polarization is maintained can be removed among the reflected light Li. As a result, the noise of the captured image is reduced. For example, in a case of imaging a human face, reflected light due to irregularities of the face can be removed, so that a captured image with high image quality can be obtained for the human face. Therefore, the imaging system is suitable for, for example, a driver monitoring system, an eye-tracking system, a vein authentication system, and the like. The irregularities of the face also include glasses and the like.

As described above, in a case where the linearly polarized light is used and the second polarizing filter 24 is disposed at the position Pj shown in FIG. 1, the light at the angle deviating from the polarization axis of the second polarizing filter 24 passes through the second polarizing filter 24, so that the reflected light in which the linear polarization is maintained passes through. As a result, the noise occurs in the captured image.

On the other hand, in the imaging system, even in a case where the linearly polarized light is used, the second polarizing filter 24 is disposed at the above-described pupil position or the above-described image side position, so that even in a case where the reflected light Li is incident on the lens 20 from an oblique direction, the light at the angle deviating from the polarization axis of the second polarizing filter 24 is suppressed from being incident on the second polarizing filter 24. Therefore, the occurrence of the noise which occurs in a case where the second polarizing filter 24 is disposed at the position Pj as described above is suppressed, and as a result, the captured image with reduced noise can be obtained.

It is preferable that the second linear polarizer 29 is an absorption type linear polarizer. As a result, the reflection in the imaging device 14 is suppressed, so that the noise of the captured image can be further reduced.

It is preferable that the second linear polarizer 29 has an average transmittance of visible light of 70% or more. As a result, a clear image in the visible light region can be obtained.

The average transmittance of visible light is more preferably 80% or more, and still more preferably 90% or more. The upper limit value thereof is not particularly limited, and is, for example, 99% or less.

The average transmittance of visible light is an average value of transmittances at each wavelength in the entire visible light region, and can be measured using a spectrophotometer.

More specifically, the average transmittance of visible light of the second linear polarizer described above is measured by measuring a transmittance of the second linear polarizer for each 1 nm in a wavelength range of 400 nm or more and less than 700 nm using an ultraviolet-visible-near infrared spectrophotometer (for example, ultraviolet-visible-near infrared spectrophotometer V-660 (JASCO Corporation)), and calculating an arithmetic average of the transmittances at the obtained wavelengths.

In addition, it is preferable that the second polarizing filter 24 has a haze of 1 or less. As a result, the reflection in the imaging device 14 is suppressed, so that the noise of the captured image can be further reduced. The lower limit value of the haze is 0.1.

The haze of the second polarizing filter 24 can be measured using a haze meter.

The imaging system 10 is not limited to the configuration of using the linearly polarized light in which the first polarizing filter 16 includes the first linear polarizer 28 and the second polarizing filter 24 includes the second linear

polarizer 29 as described above. For example, circularly polarized light can also be used.

In this case, the first polarizing filter 16 has a configuration of including the first linear polarizer 28 and a λ/4 plate. The λ/4 plate is disposed such that the slow axis thereof is tilted by 45° ± 10° with respect to the polarization axis D1 of the first linear polarizer 28. As a result, circularly polarized light is obtained.

The second polarizing filter 24 has a configuration of including the second linear polarizer 29 and a λ/4 plate. The λ/4 plate is disposed such that the slow axis thereof is tilted by 45° ± 10° with respect to the polarization axis D2 of the second linear polarizer 29. As a result, circularly polarized light is obtained.

The λ/4 plate is a plate in which the emitted light is λ/4 with respect to a wavelength λ of the incidence light.

In a case of the circularly polarized light, an orientation of the circularly polarized light is reversed in a case of being reflected. Therefore, in a case where the circularly polarized light which has passed through the first polarizing filter 16 is right-handed circularly polarized infrared rays, the circularly polarized light is to be left-handed circularly polarized light after being reflected by the target object 13, and the orientation is reversed. Therefore, in order to shield the left-handed circularly polarized light, the second polarizing filter 24 has the same configuration as the first polarizing filter 16.

[λ/4 plate]

As the λ/4 plate, any retardation element which has a phase retardation corresponding to 1/4 wavelength in a predetermined wavelength range can be used without limitation, and examples thereof include an inorganic retardation plate, a stretched polymer retardation plate, a liquid crystal retardation plate in which a liquid crystal compound or a polymerizable liquid crystal compound is fixed in an aligned state, and a metasurface retardation plate. The phase retardation corresponding to 1/4 wavelength represents that Re(550) is in a range of 120 nm to 160 nm. In a case of acting on visible light flux, it is preferable to exhibit 1/4 wavelength characteristics in a wide band, and it is preferable to exhibit so-called reverse wavelength dispersibility in which wavelength dispersibility is represented by a relationship of $Re(450) < Re(550) \leq Re(650)$.

The λ/4 plate may be a single-layer film or sheet, or may be formed by laminating a plurality of films or sheets to exhibit the characteristics. In addition, the λ/4 plate may exhibit the characteristics of the λ/4 plate only for specific polarization by being combined with a retardation plate using twisted aligned liquid crystal or hybrid aligned liquid crystal.

In addition, the λ/4 plate is a retardation plate having a function of converting linearly polarized light having a specific wavelength into circularly polarized light (or converting circularly polarized light into linearly polarized light). More specifically, the λ/4 plate is a plate in which the in-plane retardation Re at a predetermined wavelength λ nm is λ/4 (or an odd multiple thereof). In the present example, the λ/4 plate acts as a λ/4 plate with respect to the infrared rays having the wavelength λ, emitted from the light source 12. An in-plane retardation Re(λ) of the λ/4 plate may have an error of approximately 25 nm around an ideal value (λ/4 nm).

The λ/4 plate may be configured by a single retardation layer, or may be configured by laminating two or more retardation layers by a method such as bonding and sequential formation. The retardation layer is a layer exhibiting optical anisotropy. Examples of the retardation layer include a layer in which at least two of nx, ny, or nz are different. nx represents a refractive index in a direction (in-plane direction) perpendicular to a thickness direction of the retardation layer, in which the maximum refractive index is provided. ny represents a refractive index of the retardation layer in the in-plane direction and in a direction orthogonal to the nx direction. nz represents a refractive index of the retardation layer in the thickness direction. In addition, the λ/4 plate may include a support which supports the retardation layer, or the like.

A material constituting the retardation layer is not particularly limited, and examples thereof include a liquid crystal compound and a polymer. The liquid crystal compound can form the retardation layer by aligning a liquid crystal material so as to exhibit refractive index anisotropy. The polymer can form the retardation layer by stretching a polymer film obtained by casting, coating, or the like so as to exhibit refractive index anisotropy. The retardation layer is preferably a layer formed of a liquid crystal compound from the viewpoint of thin thickness, and more preferably a layer formed of a liquid crystal compound having a polymerizable group.

The type of the liquid crystal compound is not particularly limited. In general, the types of the liquid crystal compound are classified into a rod-shaped type (rod-like liquid crystal compound) and a disk-shaped type (discotic liquid crystal compound) from the shapes thereof. Furthermore, the liquid crystal compound can be classified into a low-molecular-weight type and a high-molecular-weight type. The term "high-molecular-weight" generally refers to a compound having a degree of polymerization of 100 or more (Polymer Physics-Phase Transition Dynamics, written by Masao Doi, p. 2, published by Iwanami Shoten, 1992). Any liquid crystal compound can be used in the present invention, and it is preferable to use a rod-like liquid crystal compound or a discotic liquid crystal compound, and it is more preferable to use a rod-like liquid crystal compound. Two or more types of rod-like liquid crystal compounds, two or more types of discotic liquid crystal compounds, or a mixture of a rod-like liquid crystal compound and a discotic liquid crystal compound may be used.

Examples of the rod-like liquid crystal compound include liquid crystal compounds described in claim 1 of JP1999-513019A (JP-H11-513019A) and paragraphs 0026 to 0098 of JP2005-289980A. Examples of the discotic liquid

crystal compound include liquid crystal compounds described in paragraphs 0020 to 0067 of JP2007-108732A and paragraphs 0013 to 0108 of JP2010-244038A.

The liquid crystal compound preferably has a polymerizable group. That is, the liquid crystal compound is preferably a polymerizable liquid crystal compound. In a case where the liquid crystal compound has a polymerizable group, the alignment state of the liquid crystal compound can be easily immobilized by a curing treatment described later. The type of the polymerizable group included in the liquid crystal compound is not particularly limited, but is preferably a functional group capable of an addition polymerization reaction, more preferably a polymerizable ethylenically unsaturated group or a ring-polymerizable group, and still more preferably a (meth)acryloyl group, a vinyl group, a styryl group, or an allyl group. The number of polymerizable groups included in the liquid crystal compound is not particularly limited, but is preferably 2 or more. The upper limit thereof is not particularly limited, but may be 10 or less.

The liquid crystal compound forming the retardation layer preferably includes a liquid crystal compound represented by General Formula (1).

$$L^1\text{—}SP^1\text{—}A^1\text{—}\left(D\text{—}A^2\right)_n\text{—}SP^2\text{—}L^2 \qquad (1)$$

In Formula (1),

D's <linking bond> each independently represent a single bond, -CO-, -O-, -S-, -C(=S)-, $-CR^1R^2-$, $-CR^3=CR^4-$, $-NR^5-$, or a divalent linking group consisting of a combination of two or more of these groups, in which $R^1$ to $R^5$ each independently represent a hydrogen atom, a fluorine atom, or an alkyl group having 1 to 12 carbon atoms.

$A^1$ and $A^2$ <rigid ring> each independently represent an aromatic hydrocarbon ring which may have a substituent, an aromatic heterocyclic ring which may have a substituent, or a divalent alicyclic hydrocarbon group which may have a substituent. Here, one or more of $-CH_2-$'s constituting the alicyclic hydrocarbon group may be replaced with -O-, -S-, or -NH-.

$SP^1$ and $SP^2$ <flexible chain> each independently represent a single bond or a divalent aliphatic hydrocarbon group having 1 to 20 carbon atoms, which may have a substituent. Here, one or more methylene groups constituting the aliphatic hydrocarbon group, which may have a substituent, may be replaced with -O-, -S-, -NH-, -N(Q)-, or CO-. Q represents a substituent.

$L^1$ and $L^2$ <terminal group> each independently represent a monovalent organic group, and at least one of $L^1$ or $L^2$ represents a polymerizable group.

n represents an integer of 0 or more.

Specific examples of the thermotropic liquid crystal are exemplified in [0129] to [0249] of WO2022/215757A.

The liquid crystal compound may be a liquid crystal compound exhibiting forward wavelength dispersibility or reverse wavelength dispersibility. In a case of using a retardation layer exhibiting characteristics of a broadband λ/4 plate as a single film, a liquid crystal compound exhibiting so-called reverse wavelength dispersibility, in which a phase difference also increases with an increase in wavelength, is preferable, and a liquid crystal compound having two or more polymerizable groups and exhibiting reverse wavelength dispersibility is more preferable.

It is preferable that the λ/4 plate satisfies the following expression.

$$0.50 < Re(450)/Re(550) < 1.00$$

In addition, in a case where the retardation layer is a layer formed of a liquid crystal composition containing the liquid crystal compound, the liquid crystal composition may contain a surfactant, a polymerization initiator, a crosslinking agent, and other additives, in addition to the above-described liquid crystal compound.

The surfactant is preferably a compound which can function as an alignment control agent contributing to the alignment of the cholesteric liquid crystalline phase in a stable or rapid manner. Examples of the surfactant include a silicone-based surfactant and a fluorine-based surfactant. In addition, it is also preferable to use a non-fluorine-based surfactant as the surfactant.

The non-fluorine-based surfactant preferably includes a siloxane unit or a long-chain alkyl group.

As described above, the retardation layer is preferably a layer formed of a liquid crystal compound having a polymerizable group, and more preferably a layer formed by fixing an alignment state of a liquid crystal compound having a polymerizable group. The alignment states that the liquid crystal compound having a polymerizable group may assume are not particularly limited, and examples thereof include homogeneous alignment, homeotropic alignment, twisted alignment, cholesteric alignment, hybrid alignment (an alignment in which a tilt angle of the liquid crystal compound continuously changes from one surface to the other surface), and tilt alignment (an alignment in which a tilt angle of the liquid crystal compound is constant from one surface to the other surface). The twisted alignment represents an alignment

state in which the liquid crystal compound is twisted with respect to the thickness direction as an axis of rotation, and in a case where the liquid crystal compound is in a twisted alignment and has a predetermined tilt angle (the tilt angle is more than 0°), such alignment falls under twisted hybrid alignment. In the present specification, the twisted alignment corresponds to an aspect in which a twisted angle of the liquid crystal compound is less than 360°, and the cholesteric alignment corresponds to an aspect in which a twisted angle of the liquid crystal compound is 360° or more.

The "fixed" state is the most typical and preferred aspect of a state in which the alignment of the liquid crystal compound is maintained. The "fixed" state is not limited thereto, and specifically, it is more preferable that, in a temperature range of usually 0°C to 50°C or in a temperature range of -30°C to 70°C under more severe conditions, the layer does not exhibit fluidity and a fixed alignment form can be maintained stably without any change in the alignment mode due to an external field or an external force.

The retardation layer formed of the liquid crystal compound may have a plurality of regions in which alignment states of the liquid crystal compound are different from each other along the thickness direction. For example, the retardation layer may have a region formed by fixing a state where the liquid crystal compound is homogeneously aligned and a region formed by fixing a state where the liquid crystal compound is twisted and aligned, along the thickness direction.

A thickness of the retardation layer is not particularly limited, but is preferably 0.1 to 10.0 μm and more preferably 0.5 to 5.0 μm.

The λ/4 plate may be configured by a single retardation layer, may be configured by lamination of two or more retardation layers, or may be, for example, a configuration in which a λ/4 retardation layer and a λ/2 retardation layer are combined. In addition, in order to compensate for a change in phase difference with respect to incident light in an oblique direction, other retardation layers such as a positive C-plate and a negative C-plate may be further added.

Here, an Nz factor of the λ/4 plate is preferably more than 0 and less than 1, more preferably 0.2 to 0.7, still more preferably 0.3 to 0.6, and even more preferably 0.5. The Nz factor is a value represented by $Nz = (nx - nz)/(nx - ny)$ using a refractive index nx in the in-plane slow axis direction, a refractive index ny in a direction orthogonal to the in-plane slow axis, and a refractive index nz in the thickness direction. The refractive index nx in the in-plane slow axis direction, the refractive index ny in the direction orthogonal to the in-plane slow axis, and the refractive index nz in the thickness direction can be measured using AxoScan or an Abbe refractometer.

By setting the Nz factor of the λ/4 plate to be more than 0 and less than 1, it is possible to compensate for a change in phase difference with respect to light incident from an oblique direction. For example, infrared rays which are diverged by the lens and are incident on the λ/4 plate are incident on the λ/4 plate from a direction substantially perpendicular to the λ/4 plate in the vicinity of the center (position through which the optical axis of the lens passes). Therefore, the λ/4 plate acts to appropriately provide a phase difference of λ/4 to the incident infrared rays. On the other hand, at a position spaced from the center, the infrared rays are incident on the λ/4 plate from an oblique direction, that is, from an angle (polar angle) of more than 0° with respect to a normal line of the surface of the λ/4 plate. Therefore, in a case where the Nz factor is 0, the phase difference provided to the incident infrared rays deviates from λ/4, and thus the converted infrared rays may be elliptically polarized. Therefore, by setting the Nz factor to be more than 0 and less than 1, it is possible to set the phase difference provided to the infrared rays incident on the λ/4 plate from an oblique direction to λ/4, and thus it is possible to appropriately convert the incident infrared rays into circularly polarized light.

In addition, both the first polarizing filter 16 and the second polarizing filter 24 can be formed using a polarizer having a cholesteric liquid crystal layer. In this case, the first polarizing filter includes a first cholesteric liquid crystal layer, and the second polarizing filter includes a second cholesteric liquid crystal layer. The first cholesteric liquid crystal layer and the second cholesteric liquid crystal layer reflect light having the same helical direction.

FIG. 3 is a side view showing another example of the second polarizing filter in the imaging system according to the embodiment of the present invention. FIG. 4 is a plan view showing a first layer of another example of the second polarizing filter in the imaging system according to the embodiment of the present invention. FIG. 5 is a schematic cross-sectional view showing the first layer of another example of the second polarizing filter in the imaging system according to the embodiment of the present invention. FIG. 5 is a cross-sectional view taken along a line A-A in FIG. 4.

FIG. 6 is a plan view showing a second layer of another example of the second polarizing filter in the imaging system according to the embodiment of the present invention. FIG. 7 is a schematic cross-sectional view showing the second layer of another example of the second polarizing filter in the imaging system according to the embodiment of the present invention. FIG. 7 is a cross-sectional view taken along a line A-A in FIG. 6.

FIG. 8 is a schematic perspective view for describing a state, with respect to another example of the second polarizing filter in the imaging system according to the embodiment of the present invention, in a case where linearly polarized infrared light which is orthogonal to an absorption axis for infrared rays existing in an in-plane direction is irradiated from a normal direction of an optical element and from a direction tilted by 45° from the normal direction at an azimuth angle orthogonal to the absorption axis.

FIG. 9 is a schematic view for describing a mechanism in which a signal (S)/noise (N) ratio is improved in another example of the second polarizing filter in the imaging system according to the embodiment of the present invention.

In addition, the second polarizing filter 30 is, for example, an optical element having a configuration in which a first layer 32 and a second layer 34 are laminated. As will be described later, the first layer 32 and the second layer 34 contain an infrared absorbing dichroic substance, and alignment states thereof are different from each other.

In FIG. 4, a direction X and a direction Y represent orientations of two coordinate axes orthogonal to each other on an observation surface. In FIG. 5, a direction X and a direction Z represent orientations of two coordinate axes orthogonal to each other on an observation surface. The direction Z is parallel to a thickness direction of the first layer 32.

As shown in FIGS. 4 and 5, the first layer 32 contains an infrared absorbing dichroic substance N in the inside thereof.

In addition, as shown in FIGS. 4 and 5, in the first layer 32, a major axis direction of the infrared absorbing dichroic substance N is arranged along the Y axis direction (up-down direction of the paper plane in FIG. 4).

Therefore, in the first layer 32, an absorption axis is provided with respect to the infrared rays in the Y axis direction of the in-plane direction.

In FIG. 6, a direction X and a direction Y represent orientations of two coordinate axes orthogonal to each other on an observation surface. In FIG. 7, a direction X and a direction Z represent orientations of two coordinate axes orthogonal to each other on an observation surface. The direction Z is parallel to a thickness direction of the second layer 34.

As shown in FIGS. 6 and 7, the second layer 34 contains an infrared absorbing dichroic substance N in the inside thereof.

In addition, as shown in FIGS. 6 and 7, in the second layer 34, a major axis direction of the infrared absorbing dichroic substance N is arranged along the Z axis direction (up-down direction of the paper plane in FIG. 7).

Therefore, in the second layer 34, an absorption axis is provided with respect to the infrared rays in the Z axis direction of the in-plane direction (that is, the thickness direction).

The second polarizing filter 30 includes the first layer 32 having an absorption axis with respect to infrared rays in the in-plane direction and the second layer 34 having an absorption axis with respect to infrared rays in the thickness direction.

As shown in FIG. 8, the second polarizing filter 30 has an absorption axis derived from the first layer 32 in the Y axis direction in the in-plane direction. That is, the absorption axis is provided in a direction indicated by a thin black arrow.

Next, characteristics in a case where the second polarizing filter 30 is irradiated with linearly polarized light of infrared rays orthogonal to the absorption axis will be described.

First, in the second polarizing filter 30, an azimuth of the linearly polarized light of infrared rays orthogonal to the absorption axis corresponds to the X axis direction. In the second polarizing filter 30, light is incident on a front surface 34a of the second layer 34 shown in FIG. 8, and is emitted from a back surface 32b of the first layer 32.

As shown in a white arrow direction in FIG. 8, in a case where the above-described linearly polarized light is irradiated from the normal direction of the second polarizing filter 30, the absorption axis of the second layer 34 is parallel to the thickness direction and orthogonal to the absorption axis of the first layer 32, and thus the linearly polarized light is transmitted with almost no absorption.

On the other hand, in a case where the linearly polarized light of infrared rays is irradiated from a direction (direction of a thick black arrow in FIG. 8) tilted by 45° from the normal direction at an azimuth angle (azimuth angle indicated by a broken line in FIG. 8) orthogonal to the absorption axis of the second polarizing filter 30, the absorption axis of the first layer 32 and the absorption axis of the second layer 34 intersect each other as in crossed nicols, and thus the light incident from the direction of the thick black arrow is mostly absorbed in the second polarizing filter 30 and is not transmitted.

That is, the second polarizing filter 30 is an optical element in which an absorbance of light incident from the normal direction is larger than an absorbance of light incident from a direction tilted by 45° from the normal direction.

Therefore, in such a second polarizing filter 30, the light incident from the normal direction is readily transmitted, whereas the light incident from an oblique direction is not transmitted.

Therefore, by using the second polarizing filter 30 including the first layer 32 having the absorption axis with respect to infrared rays in the in-plane direction and the second layer 34 having the absorption axis with respect to infrared rays in the thickness direction as described above, influence of stray light is suppressed.

Hereinafter, the mechanism will be described with reference to FIG. 9.

As described above, in the second polarizing filter 30, the light incident from the normal direction is readily transmitted, whereas the light incident from an oblique direction is not transmitted. Therefore, in the second polarizing filter 30, among reflected light reflected by the target object 13, the light incident on the front surface 34a of the second layer 34 at an angle close to the normal direction is transmitted from the back surface 32b of the first layer 32. However, the light incident on the front surface 34a of the second layer 34 from an oblique direction, that is, the stray light S is absorbed by the second polarizing filter 30. As a result, the second polarizing filter 30 has a high S/N ratio.

FIG. 10 is a plan view showing still another example of the second polarizing filter in the imaging system according to the embodiment of the present invention. FIG. 11 is a cross-sectional view showing still another example of the second polarizing filter in the imaging system according to the embodiment of the present invention. FIG. 11 is a cross-sectional

view taken along a line B-B in FIG. 10.

FIG. 12 is a schematic perspective view for describing a state, with respect to still another example of the second polarizing filter in the imaging system according to the embodiment of the present invention, in a case where linearly polarized infrared light which is orthogonal to an absorption axis for infrared rays existing in an in-plane direction is irradiated from a normal direction of an optical element and from a direction tilted by 45° from the normal direction at an azimuth angle orthogonal to the absorption axis. FIG. 13 is a schematic view for describing a mechanism in which an S/N ratio is improved in still another example of the second polarizing filter in the imaging system according to the embodiment of the present invention.

Unlike the second polarizing filter 30 shown in FIG. 3, the second polarizing filter 36 is a single-layer optical element and contains an infrared absorbing dichroic substance in a predetermined alignment state as will be described later.

In FIG. 10, a direction X and a direction Y represent orientations of two coordinate axes orthogonal to each other on an observation surface. In FIG. 11, a direction Y and a direction Z represent orientations of two coordinate axes orthogonal to each other on an observation surface. The direction Z is parallel to a thickness direction of the second polarizing filter 36.

As shown in FIGS. 10 and 11, the second polarizing filter 36 contains an infrared absorbing dichroic substance N in the inside thereof.

In addition, as shown in FIG. 10, in the in-plane direction of the second polarizing filter 36, a major axis direction of the infrared absorbing dichroic substance N is arranged along the Y axis direction (up-down direction of the paper plane in FIG. 10). Therefore, in the in-plane direction of the second polarizing filter 36, an absorption axis is provided with respect to the infrared rays in the Y axis direction.

In addition, as shown in FIG. 11, in a cross-section taken along the absorption axis, the infrared absorbing dichroic substance N is arranged in a disk shape. Therefore, in a cross section of the second polarizing filter 36 along the absorption axis with respect to infrared rays in the in-plane direction, there is no absorption anisotropy with respect to the infrared rays.

As described above, the second polarizing filter 36 consists of a single layer having an absorption axis with respect to infrared rays in the in-plane direction, and is an optical element having no absorption anisotropy with respect to infrared rays in the cross section along the absorption axis.

As shown in FIG. 12, the second polarizing filter 36 has an absorption axis derived from a side surface of the infrared absorbing dichroic substance N arranged in a disk shape in the in-plane direction of the Y axis direction. That is, the absorption axis is provided in a direction indicated by a thin black arrow.

Next, characteristics in a case where the second polarizing filter 36 is irradiated with linearly polarized light of infrared rays orthogonal to the absorption axis will be described.

First, in the second polarizing filter 36, an azimuth of the linearly polarized light of infrared rays orthogonal to the absorption axis corresponds to the X axis direction. In the second polarizing filter 36, light is incident on a front surface 36a shown in FIG. 12, and is emitted from a back surface 36b.

As shown in a white arrow direction in FIG. 12, in a case where the above-described linearly polarized light is irradiated from the normal direction of the second polarizing filter 36, the linearly polarized light is orthogonal to the absorption axis, and thus the linearly polarized light is transmitted with almost no absorption.

On the other hand, in a case where the linearly polarized light of infrared rays is irradiated from a direction (direction of a thick black arrow in FIG. 12) tilted by 45° from the normal direction at an azimuth angle (azimuth angle indicated by a broken line in FIG. 5) orthogonal to the absorption axis of the second polarizing filter 36, there is no absorption anisotropy for the infrared rays in the cross section along the absorption axis, and thus the light incident from the direction of the thick black arrow is mostly absorbed in the infrared absorbing dichroic substance N in the second polarizing filter 36 and is not transmitted.

That is, the second polarizing filter 36 is an optical element in which an absorbance of light incident from the normal direction is larger than an absorbance of light incident from a direction tilted by 45° from the normal direction.

Therefore, in such a second polarizing filter 36, the light incident from the normal direction is readily transmitted, whereas the light incident from an oblique direction is not transmitted.

Accordingly, in the second polarizing filter 36 shown in FIG. 13, among reflected light reflected by the target object 13, the light incident on the front surface 36a at an angle close to the normal direction is transmitted from the back surface 36b. However, the light incident on the front surface 36a from an oblique direction, that is, the stray light S is absorbed by the second polarizing filter 36. As a result, the second polarizing filter 36 has a high S/N ratio.

The optical element in which the absorbance of the light incident from the normal direction is larger than the absorbance of the light incident from a direction tilted by 45° from the normal direction is not limited to the above-described configuration, and for example, an optical element having a limited viewing angle, such as a louver film and a privacy film, can also be used. In this case, the louver film or the privacy film is not used alone, but is provided, for example, on the incidence side of the linear polarizer.

[Second example of imaging system]

FIG. 14 is a schematic view showing a second example of the imaging system according to the embodiment of the present invention.

In an imaging system 11 shown in FIG. 14, the same components as those of the imaging system 10 shown in FIG. 1 are designated by the same reference numerals, and detailed descriptions thereof will be omitted.

The imaging system 11 is different from the imaging system 10 shown in FIG. 1 in that a first circular polarizing filter 60 which circularly polarizes the infrared rays emitted from the light source 12 is provided between the light source 12 and the target object 13, instead of the first polarizing filter 16. In addition, the imaging system 11 is different from the imaging system 10 shown in FIG. 1 in that the imaging device 14 includes, from the incidence side, a second circular polarizing filter 62 which circularly polarizes the infrared rays, the lenses 20 and 22, and the image sensor 26, instead of the second polarizing filter 24. The imaging system 11 has the same configuration as the imaging system 10 shown in FIG. 1, except for the above.

The above-described first circular polarizing filter 60 which circularly polarizes the infrared rays includes, for example, a linear polarizer 63 and a λ/4 plate 64. In this case, as in the above-described first polarizing filter 16, the λ/4 plate 64 is disposed such that the slow axis thereof is tilted by 45° ± 10° with respect to a polarization axis (not shown) of the linear polarizer 63. In the first circular polarizing filter 60, the linear polarizer 63 is disposed to face the light source 12. A front surface 60a of the first circular polarizing filter 60 is composed of the λ/4 plate 64, and a back surface 60b thereof is composed of the linear polarizer 63.

In the first circular polarizing filter 60, unpolarized infrared rays incident on the linear polarizer 63 are converted into circularly polarized light, and the circularly polarized infrared rays are emitted from the front surface 60a.

The above-described second circular polarizing filter 62 which circularly polarizes the infrared rays includes a linear polarizer 65 and a λ/4 plate 66, and it is preferable that an Nz factor of the λ/4 plate 66 is more than 0 and less than 1. In this case, as in the above-described second polarizing filter 24, the λ/4 plate 66 is disposed such that the slow axis thereof is tilted by 45° ± 10° with respect to a polarization axis (not shown) of the linear polarizer 65. In the second circular polarizing filter 62, the λ/4 plate 66 is disposed to face the incidence surface 20a of the lens 20. A front surface 62a of the second circular polarizing filter 62 is composed of the linear polarizer 65, and a back surface 62b thereof is composed of the λ/4 plate 66.

In the second circular polarizing filter 62, unpolarized infrared rays incident on the linear polarizer 65 are converted into circularly polarized light, and the circularly polarized infrared rays are emitted from the back surface 62b.

Furthermore, it is possible to set the phase difference provided to the infrared rays incident on the λ/4 plate from an oblique direction to λ/4, and thus it is possible to appropriately convert the incident infrared rays into circularly polarized light.

In this case, the infrared rays emitted from the light source 12 pass through the first circular polarizing filter 60 to be circularly polarized infrared rays, and the circularly polarized infrared rays, that is, the emitted light Lo is emitted to the target object 13. The circularly polarized infrared rays are reflected by the target object 13. The circularly polarized infrared rays reflected by the target object 13, that is, the reflected light Li passes through the second circular polarizing filter 62, the lens 20, and the lens 22 in this order, and is incident on the image sensor 26. In this case, in the second circular polarizing filter 62, by the linear polarizer 65, the circularly polarized infrared rays reflected by the target object 13 are obtained as linearly polarized light in the polarization axis direction of the linear polarizer 65. The linearly polarized light by the linear polarizer 65 is converted into circularly polarized light by the λ/4 plate 66. Therefore, reflected light in which the linear polarization is maintained can be removed among the reflected light Li. As a result, the noise of the captured image is reduced. For example, in a case of imaging a human face, reflected light due to irregularities of the face can be removed, so that a captured image with high image quality can be obtained for the human face. Therefore, as in the imaging system 10 shown in FIG. 1, the imaging system 11 is suitable for, for example, a driver monitoring system, an eye-tracking system, a vein authentication system, and the like. The irregularities of the face also include glasses and the like.

Although the configurations of including the linear polarizer and the λ/4 plate have been exemplified for the first circular polarizing filter 60 and the second circular polarizing filter 62, the present invention is not limited thereto as long as the infrared rays can be circularly polarized, and the first circular polarizing filter 60 and the second circular polarizing filter 62 may be configured by one member.

Since the linear polarizer 65 of the second circular polarizing filter 62 is disposed on the incidence side, the linear polarizer 65 is preferably an absorption type linear polarizer. As a result, the reflection in the front surface 62a of the second circular polarizing filter 62 is suppressed, so that the noise of the captured image can be further reduced.

It is preferable that the linear polarizer 65 of the second circular polarizing filter 62 has an average transmittance of visible light of 70% or more. As a result, a clear image in the visible light region can be obtained. The average transmittance of visible light of the linear polarizer is more preferably 80% or more, and still more preferably 90% or more. The upper limit value thereof is not particularly limited, and is, for example, 99% or less. The average transmittance of visible light is as described above, and thus the detailed description thereof will be omitted.

In addition, it is preferable that the second circular polarizing filter 62 has a haze of 1 or less. As a result, the reflection in the imaging device 14 is suppressed, so that the noise of the captured image can be further reduced. The lower limit value of the haze is 0.1.

[Application example of imaging system]

FIG. 15 is a schematic view showing an example of an in-vehicle occupant monitoring system in which the imaging system according to the embodiment of the present invention is used. FIG. 16 is a schematic view showing an example of a configuration of the in-vehicle occupant monitoring system.

In FIGS. 15 and 16, the same components as those of the imaging system 10 shown in FIG. 1 are designated by the same reference numerals, and detailed descriptions thereof will be omitted.

FIG. 15 shows an inside of a vehicle 40. Two seats 42 are arranged in the vehicle 40. A driver 43 is seated on one seat 42, and a passenger is seated on the other seat 42. For example, an imaging system 46 is installed on a dashboard 45 in front of the vehicle.

In the imaging system 46, a target object is at least one of the driver of the vehicle or the passenger of the vehicle. In the example shown in FIG. 15, the target object is the driver 43. In a case where only the driver 43 is monitored, it is referred to as a driver monitoring system.

The imaging system 46 can also be disposed such that the driver 43 and the passenger 44 are within an angle of view.

The imaging system 46 is different from the imaging system 10 shown in FIG. 1 in that a calculation unit 48 is provided, the calculation unit 48 is connected to the image sensor 26 and the display control unit 17, and the calculation unit 48 is controlled by the controller 18. Since the imaging system 46 can eliminate the reflected light due to the irregularities of the face as described above, a captured image with high image quality can be obtained for the face of the driver 43.

The calculation unit 48 of the imaging system 46 identifies, for example, the orientation of the face of the driver 43 based on the image signal representing the face of the driver 43 obtained by the image sensor 26. For example, a known image recognition technology and artificial intelligence (AI) technology such as machine learning and deep learning are used for identifying the orientation of the face of the driver 43.

In addition, the calculation unit 48 stores determination reference information in which a state such as drowsiness and distraction and the orientation of the face are associated in advance with the orientation of the face. The state of the driver 43 is determined by comparing the identified orientation of the face of the driver 43 with the above-described determination reference information. A determination result of the state can be output to the display control unit 17 and displayed on the display unit 19. As a result, the state of the driver 43 can be visually grasped.

For example, a known image matching technology and AI technology such as machine learning and deep learning are used for determining the state of the driver 43.

In addition, the calculation unit 48 can also extract time-series brightness information by analyzing the captured image of the driver 43 and acquire pulse information. As a result, the physical state of the driver 43 can be grasped.

In addition, in a case where the imaging system is applied to eye tracking, the calculation unit 48 may detect the pupil position based on the position of the eyes in the captured image of the face. In this case, the pupil reference position when facing the front is determined in advance. The calculation unit 48 estimates a line of sight of the driver 43 or the like based on a difference between the pupil position and the pupil reference position.

The pupil position is a center position of the pupil with respect to the outer canthus and the inner canthus in the captured image of the face. By estimating the line of sight of the driver 43 as described above, the state such as drowsiness and distraction can be estimated.

In a case of being applied to the eye tracking, the reflection component on the corneal surface is noise in a case of detecting the pupil position, but the reflection component on the corneal surface is shielded as described above, so that the captured image of the face with less noise can be obtained, and thus the line of sight of the driver 43 or the like can be estimated with high accuracy.

For example, a known image recognition technology and AI technology such as machine learning and deep learning are used for identifying the position of the eyes in the captured image of the face and for detecting the pupil position.

In addition, since the imaging system 10 can obtain an image with less noise as described above, the imaging system 10 can be used for vein authentication. In this case, the target object is, for example, a palm. Even in this case, a reflection component on the palm surface is noise, but the reflection component on the palm surface is shielded as described above, so that the vein image of the palm with less noise can be obtained.

The imaging system 10 used for the driver monitoring system, the eye tracking, and the vein authentication described above may have a configuration in which the second polarizing filter 30 is disposed on the incidence surface 20a side of the lens 20 without providing the second polarizing filter 24 as described above. Furthermore, the imaging system 11 shown in FIG. 14 can be used for the driver monitoring system, the eye tracking, and the vein authentication described

above.

[First polarizing filter and first circular polarizing filter]

The configuration of the first polarizing filter is not particularly limited as long as it can polarize the infrared rays emitted from the light source 12 as described above, but the first polarizing filter and the second polarizing filter have the same polarization mode. For example, in a case where the first polarizing filter is linear polarization, the second polarizing filter is also linear polarization. In a case where the first polarizing filter is circular polarization, that is, in a case of the first circular polarizing filter, the second polarizing filter is also circular polarization. That is, the second circular polarizing filter is used. In a case where the first polarizing filter has a cholesteric liquid crystal layer, the second polarizing filter also has a cholesteric liquid crystal layer.

[Second polarizing filter and second circular polarizing filter]

The configuration of the second polarizing filter is not particularly limited as long as it can polarize the infrared rays incident on the imaging device as described above.
The configuration of the second circular polarizing filter is not particularly limited as long as it can circularly polarize the infrared rays incident on the imaging device as described above.
The second polarizing filter and the second circular polarizing filter may be of a reflective type or an absorptive type, but from the viewpoint of suppressing the reflection in the imaging device 14 and suppressing the noise of the captured image, the second polarizing filter and the second circular polarizing filter are preferably of an absorptive type.
As described above, the first polarizing filter can include the first linear polarizer, and the second polarizing filter can include the second linear polarizer. In addition, as described above, the first circular polarizing filter can include the linear polarizer, and the second circular polarizing filter can include the linear polarizer. As described above, both the first polarizing filter and the second polarizing filter can have a configuration of including the linear polarizer. Hereinafter, the linear polarizer will be described.

(Linear polarizer)

The linear polarizer has a function of converting non-polarized infrared rays into linearly polarized light.
The linear polarizer includes a reflective type linear polarizer and an absorption type linear polarizer.
Examples of the reflective type linear polarizer include (i) a linear-polarization reflective plate having a multilayer structure, (ii) a polarizer in which thin films having different birefringence are laminated, (iii) a wire grid polarizer, (iv) a polarizing prism, and (v) an anisotropic scattering polarizer.

(i) Examples of the linear-polarization reflective plate having a multilayer structure include a refractive plate formed by laminating a plurality of dielectric thin films having different refractive indices. In order to form a wavelength selective reflection film, alternate lamination of a dielectric thin film of a high refractive index and a dielectric thin film of a low refractive index in plural layers is preferable, but the layers are not limited to two or more kinds, and may be more than two.

The number of layers to be laminated is preferably 2 to 20, more preferably 2 to 12, still more preferably 4 to 10, and particularly preferably 6 to 8. In a case where the number of layers to be laminated is more than 20, production efficiency may be lowered due to multilayer deposition.
A lamination order of the dielectric thin films is not particularly limited, and can be appropriately selected in accordance with the purpose. For example, in a case where an adjacent film has a high refractive index, a film having a lower refractive index than the adjacent film is laminated first. In an opposite manner, in a case where an adjacent layer has a low refractive index, a film having a higher refractive index than the adjacent layer is laminated first. A boundary line whether the refractive index is high or low is 1.8. Whether the refractive index is high or low is not an absolute matter, but among materials having a high refractive index, materials having a relatively large refractive index and materials having a relatively small refractive index may exist, and the materials having a relatively large refractive index and the materials having a relatively small refractive index may be used alternately.
Examples of a material for the dielectric thin film having a high refractive index include $Sb_2O_3$, $Sb_2S_3$, $Bi_2O_3$, $CeO_2$, $CeF_3$, $HfO_2$, $La_2O_3$, $Nd_2O_3$, $Pr_6O_{11}$, $Sc_2O_3$, SiO, $Ta_2O_5$, $TiO_2$, TlCl, $Y_2O_3$, ZnSe, ZnS, and $ZrO_2$. Among these, $Bi_2O_3$, $CeO_2$, $CeF_3$, $HfO_2$, SiO, $Ta_2O_5$, $TiO_2$, $Y_2O_3$, ZnSe, ZnS, $ZrO_2$, and the like are preferably exemplified, and SiO, $Ta_2O_5$, $TiO_2$, $Y_2O_3$, ZnSe, ZnS, $ZrO_2$, and the like are particularly preferably exemplified.
Examples of a material for the dielectric thin film having a low refractive index include $Al_2O_3$, $BiF_3$, $CaF_2$, $LaF_3$, $PbCl_2$, $PbF_2$, LiF, $MgF_2$, MgO, $NdF_3$, $SiO_2$, $Si_2O_3$, NaF, $ThO_2$, and $ThF_4$. Among these, $Al_2O_3$, $BiF_3$, $CaF_2$, $MgF_2$, MgO,

$SiO_2$, $Si_2O_3$, and the like are preferably exemplified, and $Al_2O_3$, $CaF_2$, $MgF_2$, MgO, $SiO_2$, $Si_2O_3$, and the like are particularly preferably exemplified.

In the material for the dielectric thin film, an atomic ratio is also not particularly limited, and can be appropriately selected in accordance with the purpose. The atomic ratio can be adjusted by changing a concentration of atmospheric gas during film formation.

A method of forming the dielectric thin film is not particularly limited, and can be appropriately selected in accordance with the purpose. Examples of the film forming method include vacuum evaporation methods such as an ion plating method and an ion beam method, physical vapor deposition (PVD) methods such as sputtering, and chemical vapor deposition (CVD) methods. Among these, a vacuum evaporation method and a sputtering method are preferably exemplified, and a sputtering method is particularly preferably exemplified.

As the sputtering method, a direct current (DC) sputtering method with a high film formation rate is preferable. In the DC sputtering method, a material having high conductivity is preferably used.

In addition, as a method of performing multilayer film formation by the sputtering method, there are, for example, (1) a one chamber method that performs film formation alternately or in order from a plurality of targets in one chamber, and (2) a multi-chamber method that performs film formation continuously in a plurality of chambers. Among these, from the viewpoint of productivity and prevention of material contamination, the multi-chamber method is particularly preferable.

A film thickness of the dielectric thin film is not limited, but in an optical wavelength order, a film thickness of $\lambda/16$ to $\lambda$ is preferable, a film thickness of $\lambda/8$ to $3\lambda/4$ is more preferable, and a film thickness of $\lambda/6$ to $3\lambda/8$ is still more preferable.

A part of light propagating in a dielectric deposition layer is reflected for each dielectric thin film, which is multiple reflection. These reflected rays of light interfere with one another, and only light having a wavelength determined by a product of the thickness of the dielectric thin film and the refractive index of the film for the light is transmitted selectively. In addition, a central transmission wavelength of the dielectric deposition layer has angle dependency relative to incident light, and the transmission wavelength can be changed by changing the incident light.

(ii) As the polarizer in which thin films having different birefringence are laminated, polarizers described in JP1997-506837A (JP-H9-506837A) and the like can be used.

Specifically, in a case of performing processing under conditions selected in order to obtain the relationship of refractive indices, a polarizer can be formed by widely using various materials. In general, it is necessary that one of a first material has a refractive index different from that of a second material in the selected direction. The difference in refractive indices can be achieved by various methods including stretching during film formation or after film formation, extrusion molding, and coating. Furthermore, it is preferable that two materials have similar rheologic properties (for example, melt viscosity) so that the two materials can be coextruded.

As the polarizer in which thin films having different birefringence are laminated, a commercially available product can be used. Examples of the commercially available product include a trade name DBEF manufactured by 3M Company.

(iii) The wire grid polarizer is a polarizer which allows one component of polarized light to be transmitted and the other component to be reflected by birefringence of thin metal wires.

The wire grid polarizer is a polarizer obtained by arranging metal wires periodically, and is mainly used as a polarizer in a terahertz wave band. In order for the wire grid to function as the polarizer, an interval between wires is necessarily smaller than a wavelength of incident electromagnetic wave sufficiently.

In the wire grid polarizer, the metal wires are arranged at regular intervals. A polarized light component in a polarized light direction parallel to a longitudinal direction of the metal wires is reflected on the wire grid polarizer, and a polarized light component in a perpendicular polarized light direction passes through the wire grid polarizer.

As the wire grid polarizer, a commercially available product can be used. Examples of the commercially available product of the wire grid polarizer include a wire grid polarizing filter $50 \times 50$ and NT46-636 manufactured by Edmund Optics, Inc., and WGF (registered trademark) manufactured by Asahi Kasei Corporation.

For example, in a case of using the wire grid polarizer and a louver in combination, the louver is provided on an incidence side of the wire grid polarizer. Next, a transmission axis of the wire grid polarizer and a light shielding axis of the louver are arranged to be orthogonal to each other. The light shielding axis of the louver is disposed in a direction which cuts light incident from an oblique direction.

Examples of the absorption type linear polarizer include (i) a polarizer in which metal nanoparticles having shape anisotropy are arranged and fixed, and (ii) a polarizer in which dichroic coloring agents are arranged and fixed.

(i) The polarizer in which metal nanoparticles having shape anisotropy are arranged and fixed is a polarizer in which silver halide particles or silver particles, which have a high aspect ratio, are aligned and fixed. The polarizer is an absorption type linear polarizer which absorbs light having an electric field oscillation plane in an arrangement direction of the particles, and transmits light in a direction perpendicular to the arrangement direction of the particles. As polarizers belonging thereto, polarizers described in JP1984-083951A (JP-S59-083951A), JP1990-248341A (JP-H2-248341A), JP2003-139951A, and the like can be used.

(ii) Examples of the polarizer in which dichroic coloring agents are arranged and fixed include polarization films

obtained by adsorbing iodine to polyvinyl alcohol (PVA) or doping polyvinyl alcohol (PVA) with a dichroic coloring agent, and then stretching the PVA. In order to obtain a polarizer in an infrared region, the polyvinyl alcohol is partially dehydrated and can be used as polyvinylene. By the stretching method, the polarizer absorbs light having an electric field oscillation plane, and transmits light in a direction perpendicular to the electric field oscillation plane.

A PVA film passes through a tank containing a dyeable composition such as iodine and an iodide to dye the PVA layer, and the layer is stretched by a magnification of 4 to 6 times, thereby aligning the dichroic coloring agent. The conversion of PVA into polyvinylene can be performed by a hydrochloric acid vapor method described in US2445555A. In addition, in order to improve stability of the polarizing material, boration is also performed using an aqueous borate bath containing boric acid and borax. A commercially available film for near infrared linear polarized light, manufactured by Edmund Optics Japan Co., Ltd., can be used as a polarizer corresponding thereto.
A thickness of the linear polarizer is not limited, but is preferably 0.05 to 300 μm, more preferably 0.2 to 150 μm, and still more preferably 0.5 to 100 μm.

[Second polarizing filter containing infrared absorbing dichroic substance]

The above-described second polarizing filters 30 and 36 are specific second polarizing filters containing an infrared absorbing dichroic substance as described above. The infrared absorbing dichroic substance will be described in detail as a component of a composition described later.
The second polarizing filters 30 and 36 correspond to LCF described later.
A thickness of the above-described second polarizing filter is not particularly limited, and can be adjusted to 10 μm or less because the second polarizing filter can be formed by a coating method as shown in the formation method described later, instead of a louver film.
The thickness of the above-described second polarizing filter is preferably 0.5 to 8.0 μm and more preferably 0.5 to 6.0 μm.
In the present specification, the thickness of the second polarizing filter means an average thickness of the second polarizing filter. The above-described average thickness is obtained by measuring thicknesses of any five or more locations of the second polarizing filter and calculating an arithmetic average thereof.
A thickness of the second circular polarizing filter is the same as the thickness of the second polarizing filter described above, and thus the detailed description thereof will be omitted.
In the present invention, from the reason that in-plane direction absorption characteristics and thickness direction absorption characteristics can be independently adjusted, it is preferable that the second polarizing filter has the first layer containing the infrared absorbing dichroic substance and having an absorption axis with respect to infrared rays in the in-plane direction, and the second layer containing the infrared absorbing dichroic substance and having an absorption axis with respect to infrared rays in the thickness direction as described above.
In addition, it is preferable that the above-described second layer has no absorption anisotropy with respect to the infrared rays in the in-plane direction. The "no absorption anisotropy with respect to the infrared rays in the in-plane direction" means that, in a case where linearly polarized infrared rays are irradiated from the normal direction of the second polarizing filter at an angle of 5° for 360° while changing the azimuth angle, a difference between the maximum value and the minimum value of an absorbance is within 5% of the maximum value.
In a case where the image sensor 26 captures a visible light image, it is preferable that the average transmittance of visible light of the above-described first layer and the above-described second layer is 70% or more.
In the present invention, from the reason that the coating is completed in one layer and the thin film can be easily obtained, the above-described second embodiment is preferable, that is, it is preferable that the above-described second polarizing filter consists of a single layer containing the infrared absorbing dichroic substance and having an absorption axis with respect to infrared rays in the in-plane direction, and has no absorption anisotropy with respect to infrared rays in a cross section along the absorption axis.
Here, "no absorption anisotropy with respect to infrared rays" means that, in a case where an absorbance at an absorption axis with respect to infrared rays in the in-plane direction is represented by kx, an absorbance at a transmission axis with respect to infrared rays in the in-plane direction is represented by ky, and an absorbance in the thickness direction is represented by kz, the following relational expression is satisfied.

$$kx = kz > ky$$

In addition, regarding the state of "no absorption anisotropy with respect to infrared rays", a cross-section taken along the transmission axis with respect to infrared rays in the in-plane direction is observed by transmission microscopy using a polarization microscope, and a state not having phase difference can be evaluated as the "no absorption

anisotropy with respect to infrared rays".

In the second polarizing filter 36 (see FIG. 10), in a case where the image sensor 26 captures a visible light image, it is preferable that the infrared absorbing dichroic substance is a substance which substantially does not absorb visible light.

Here, "substance which substantially does not absorb visible light" refers to a substance having no specific peak and having a transmittance of 80% or more in a visible wavelength region of 400 nm or more and less than 700 nm, in a case where the transmittance of the substance itself is measured in the visible wavelength region.

In the second polarizing filter 36 (see FIG. 10), it is preferable that the infrared absorbing dichroic substance is a disk-like coloring agent. The disk-like coloring agent will be described in detail as a component of the composition described later.

From the viewpoint of adjusting the alignment state of the infrared absorbing dichroic substance described above, a layer structure of the second polarizing filter is preferably a layer formed of a composition containing a liquid crystal compound together with the above-described infrared absorbing dichroic substance.

Hereinafter, components contained in the composition will be described in detail, and then a method of forming the layer in the second polarizing filter will be described in detail.

<Liquid crystal compound>

The type of the liquid crystal compound is not particularly limited, and can be classified into a rod-like type (rod-like liquid crystal compound) and a disk-like type (disk-like liquid crystal compound or a discotic liquid crystal compound) in terms of the shape. Furthermore, there are a low-molecular-weight type and a high-molecular-weight type for each of the rod-like type liquid crystal compound and the disk-like type liquid crystal compound. The "high-molecular-weight" generally refers to a compound having a degree of polymerization of 100 or more (Polymer Physics-Phase Transition Dynamics, written by Masao Doi, p. 2, published by Iwanami Shoten, 1992). A mixture of two or more kinds of the rod-like liquid crystal compounds, two or more kinds of the disk-like liquid crystal compounds, or the rod-like liquid crystal compound and the disk-like liquid crystal compound may be used.

The liquid crystal compound may be a thermotropic liquid crystal compound or a lyotropic liquid crystal compound.

A position of the maximal absorption wavelength of the liquid crystal compound is not particularly limited, and is preferably in an ultraviolet range.

Since a change in temperature and a change in humidity of optical characteristics can be reduced, a liquid crystal compound (a rod-like liquid crystal compound or a disk-like liquid crystal compound) having a polymerizable group is preferable as the liquid crystal compound. The liquid crystal compound may also be a mixture of two or more kinds, and in this case, it is preferable that at least one liquid crystal compound has two or more polymerizable groups.

That is, the layer constituting the second polarizing filter is preferably a layer formed by immobilizing the liquid crystal compound (rod-like liquid crystal compound or disk-like liquid crystal compound) having a polymerizable group by polymerization or the like, and in this case, the layer does not need to exhibit liquid crystallinity after the layer is formed.

The type of the above-described polymerizable group is not particularly limited, and a polymerizable group capable of radical polymerization or cationic polymerization is preferable.

A known radically polymerizable group can be used as the radically polymerizable group, and an acryloyl group or a methacryloyl group is preferable.

A known cationically polymerizable group can be used as the cationically polymerizable group, and specific examples thereof include an alicyclic ether group, a cyclic acetal group, a cyclic lactone group, a cyclic thioether group, a spiroorthoester group, and a vinyloxy group. Among these, an alicyclic ether group or a vinyloxy group is preferable, and an epoxy group, an oxetanyl group, or a vinyloxy group is more preferable.

Particularly preferred examples of the polymerizable group include the following groups.

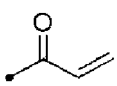 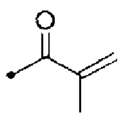 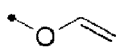 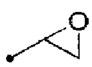 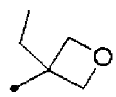

A content of the liquid crystal compound in the composition is not particularly limited, and is preferably 50% by mass or more, and more preferably 70% by mass or more with respect to the total solid content in the composition. The upper limit thereof is not particularly limited, but is usually 90% by mass or less.

The total solid content in the composition does not include a solvent.

<Infrared absorbing dichroic substance>

The infrared absorbing dichroic substance is not particularly limited as long as it is a dichroic substance which absorbs infrared rays, and is preferably a dichroic coloring agent which absorbs infrared rays. The dichroic coloring agent refers to a coloring agent having properties in which an absorbance of the molecule in a major axis direction is different from that in a minor axis direction.

Examples of the infrared absorbing dichroic substance include a diketopyrrolopyrrole-based coloring agent, a diimmonium-based coloring agent, a phthalocyanine-based coloring agent, a naphthalocyanine-based coloring agent, an azo-based coloring agent, a polymethine-based coloring agent, an anthraquinone-based coloring agent, a pyrylium-based coloring agent, a squarylium-based coloring agent, a triphenylmethane-based coloring agent, a cyanine-based coloring agent, an aminium-based coloring agent, a metal complex-based coloring agent, a boron complex-based coloring agent, an oxonol-based coloring agent, a rylene-based coloring agent, a diphenylamine-based coloring agent, a triphenylamine-based coloring agent, and a quinone-based coloring agent.

The infrared absorbing dichroic substances may be used alone or in combination of two or more.

In addition, the dichroic coloring agent can be classified into a coloring agent in which a molecular shape is a rod-like (hereinafter, abbreviated as "rod-like coloring agent") and a coloring agent in which a molecular shape is a disk-like (hereinafter, abbreviated as "disk-like coloring agent"). In the first embodiment of the present invention, the rod-like coloring agent is preferably used, and in the second embodiment of the present invention, the disk-like coloring agent is preferably used.

Here, the disk-like coloring agent has a disk-like partial structure in a mother nucleus portion thereof, and the disk-like structure in the mother nucleus portion, excluding side chain portions, can be defined by lengths a, b, and c obtained from the following (1) to (4) or the following (1), (2), and (3') to (5').

(1) Regarding the disk-like structure of the disk-like coloring agent, a molecular structure which is as close to a plane as possible is constructed; as a bond distance and a bond angle, standard values corresponding to orbital hybridization are preferably used; the standard values are described in "Handbook of Chemistry", revised fourth edition, Basic II, Chapter 15 (published by MARUZEN in 1993), edited by The Chemical Society of Japan.
(2) The structure obtained in (1) as an initial value is optimized using a molecular orbital method or a molecular force field method; as the optimization method, Gaussian92, MOPAC93, CHARMm/QUANTA, or MM3 can be applied; in particular, Gaussian92 is preferable.
(3) Each of atoms in the optimized disk-like structure is assigned with a sphere defined by van der Waals radius to describe the shape of the molecule.
(4) Three edges of a minimum cuboid where the disk-like structure having the shape obtained in (3) are set to a, b, and c.

In order to reduce arbitrariness, it is preferable to perform the following (3') to (5') instead of (3) and (4).

(3') A centroid of the structure obtained by the structure optimization is moved to an origin, and coordinate axes are set to principal axes of inertia (principal axes of inertia tensor ellipsoid).

(4') Each of the atoms is assigned with a sphere defined by van der Waals radius to describe the shape of the molecule.

(5') Lengths of coordinate axis directions on the van der Waals surface are measured and set to a, b, and c, respectively.

In a case where the disk-like structure is defined by a, b, and c obtained through the above-described procedure, it is preferable that the disk-like structure satisfies relationships of $a \geq b > c$ and $a \geq b \geq a/2$. It is more preferable that the disk-like structure satisfies relationships of $a \geq b > c$ and $a \geq b \geq 0.7a$. In addition, it is preferable that $b/2 > c$ is satisfied.

As the rod-like coloring agent, an azo coloring agent, an anthraquinone coloring agent, a perylene coloring agent, or a merocyanine coloring agent is preferable. Examples of the azo coloring agent include azo coloring agents described in JP1999-172252A (JP-H11-172252A); examples of the anthraquinone coloring agent include anthraquinone coloring agents described in JP1996-067822A (JP-H8-067822A), examples of the perylene coloring agent include perylene coloring agents described in JP1987-129380A (JP-H62-129380A); and examples of the merocyanine coloring agent include merocyanine coloring agents described in JP2002-241758A. These coloring agents may be used alone or in combination of two or more kinds thereof.

In addition, examples of the disk-like coloring agent include a polarizer using lyotropic liquid crystal represented by OPTIVA Inc., which is known as "E-Type polarizer". Examples thereof include materials described in JP2002-090547A. In addition, there is also an example of using a bisazo-based dichroic coloring agent having a thread-like micelle type structure as a chemical structure which absorbs light in a disk shape, and materials described in JP2002-090526A can be used. These coloring agents may be used alone or in combination of two or more kinds thereof.

In addition, examples of the disk-like coloring agent suitably used in the second embodiment of the present

invention include a group of compounds having a specific disk-like skeleton as a coloring agent, such as a porphyrin nucleus, a phthalocyanine nucleus, a formazan nucleus, and a triphenylmethane nucleus, and a group of disk-like coloring agent compounds in which a rod-like dichroic coloring agent such as an azo coloring agent is incorporated as a radial side chain into the disk-like skeleton such as a benzene ring and a triphenylene ring described in the discotic liquid crystal molecule. Furthermore, these coloring agents can be used in combination such that light in a desired wavelength range can be polarized. The above-described disk-like coloring agent are reported in various documents (porphyrin nucleus: N. E. Kagen et al., J. Amer. Chem. Soc., vol. 99, page 5484, 1977, phthalocyanine nucleus: "Materials for the 28th Organic Device Research Meeting, 'New Developments in Organic Phthalocyanines'" (Nagao Kobayashi, p. 1), and P. A. Stuzhin et al., Inog. Chem., vol. 37, page 2655, 1988, formazan nucleus: Chemistry and application of leuco dyes, Plenium Press, New York, 1997, Ch. 7 Danel S. Daniel, page 207, and triphenylmethane nucleus: Chemistry and application of leuco dyes, Plenium Press, New York, 1997, Ch. 4 I. J. Fletcher, page 97).

In the present invention, it is preferable that the infrared absorbing dichroic substance has a mesogenic group. In a case where the infrared absorbing dichroic substance has a mesogenic group, the infrared absorbing dichroic substance is likely to be aligned along with the above-described liquid crystal compound, and thus predetermined absorption properties are likely to be controlled.

The mesogenic group is a functional group having rigidity and aligning properties. Examples of a structure of the mesogenic group include a structure in which a plurality of groups selected from the group consisting of an aromatic ring group (an aromatic hydrocarbon ring group and an aromatic heterocyclic ring group) and an alicyclic group are directly linked to each other or indirectly linked to each other through a linking group (for example, -CO-, -O-, -NR- (R represents a hydrogen atom or an alkyl group), or a group obtained by combining these groups).

In addition, in the present invention, examples of a preferred aspect of the infrared absorbing dichroic substance include a compound represented by Formula (1).

In the compound having the structure represented by Formula (1), absorption in a visible light range is low, and coloration of the obtained light absorption anisotropic film is further suppressed. In addition, the compound has a group having a mesogenic group, and thus can be easily aligned along with the liquid crystal compound. In this case, the group having a mesogenic group is arranged such that it extends horizontally from a fused ring moiety including a nitrogen atom at the center of the compound, and as a result, the fused ring moiety is easily aligned in a direction perpendicular to a slow axis of a light absorption anisotropic film to be formed. That is, absorption in the infrared region (in particular, at a wavelength of 700 to 900 nm) derived from the fused ring moiety is easily obtained in the direction orthogonal to the slow axis of the light absorption anisotropic film, and thus a light absorption anisotropic film exhibiting desired characteristics is easily obtained.

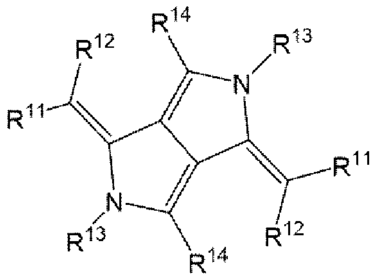

(1)

$R^{11}$ and $R^{12}$ each independently represent a hydrogen atom or a substituent, at least one of $R^{11}$ or $R^{12}$ is an electron-withdrawing group, and $R^{11}$ and $R^{12}$ may be bonded to each other to form a ring.

Examples of the substituent include an alkyl group, an alkenyl group, an alkynyl group, an aryl group, an amino group, an alkoxy group, an aryloxy group, an aromatic heterocyclic oxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a sulfamoyl group, a carbamoyl group, an alkylthio group, an arylthio group, an aromatic heterocyclic thio group, a sulfonyl group, a sulfinyl group, a ureido group, a phosphoric amide group, a hydroxyl group, a mercapto group, a halogen atom, a cyano group, a sulfo group, a carboxyl group, a nitro group, a hydroxamic acid group, a sulfino group, a hydrazino group, an imino group, a heterocyclic group, and a silyl group.

The electron-withdrawing group refers to a substituent having a positive Hammett's sigma-para value ($\sigma$p value), and examples thereof include a cyano group, an acyl group, an alkoxycarbonyl group, an aryloxycarbonyl group, a sulfamoyl group, a sulfinyl group, and a heterocyclic group.

These electron-withdrawing groups may be further substituted.

The Hammett's substituent constant $\sigma$ value will be described. The Hammett's rule is an empirical rule advocated by L. P. Hammett in 1935 so as to quantitatively discuss the effect of substituent on the reaction or equilibrium of benzene derivatives and its propriety is widely admitted at present. Substituent constants obtained by the Hammett's rule are a $\sigma$p

value and a σm value, and these values can be found in many general books. For example, these values are specifically described in "Lange's Handbook of Chemistry", edited by J. A. Dean, 12th edition, 1979 (McGraw-Hill), "Chemistry Region", extra edition, No. 122, pp. 96 to 103, 1979 (Nankodo, Co., Ltd.), and Chem. Rev., 1991, Vol. 91, pp. 165 to 195. In the present invention, a substituent having the Hammett's substituent constant σp value of 0.20 or more is preferable as the electron-withdrawing group. The σp value is preferably 0.25 or more, more preferably 0.30 or more, and still more preferably 0.35 or more. The upper limit thereof is not particularly limited, but is preferably 0.80 or less.

Specific examples thereof include a cyano group (0.66), a carboxyl group (-COOH: 0.45), an alkoxycarbonyl group (-COOMe: 0.45), an aryloxycarbonyl group (-COOPh: 0.44), a carbamoyl group ($-CONH_2$: 0.36), an alkylcarbonyl group (-COMe: 0.50), an arylcarbonyl group (-COPh: 0.43), an alkylsulfonyl group ($-SO_2Me$: 0.72), and an arylsulfonyl group ($-SO_2Ph$: 0.68).

In the present specification, Me represents a methyl group and Ph represents a phenyl group. The values in the parentheses are representative σp values of the substituents extracted from "Chem. Rev." vol. 91, pp. 165 to 195, 1991.

In a case where $R^{11}$ and $R^{12}$ are bonded to each other to form a ring, it is preferable that the formed ring is a 5- to 7-membered (preferably 5- or 6-membered) ring which is typically used as an acidic nucleus in a merocyanine coloring agent.

It is preferable that the ring which is formed by $R^{11}$ and $R^{12}$ bonded to each other is a 1,3-dicarbonyl nucleus, a pyrazolinone nucleus, a 2,4,6-triketohexahydropyrimidine nucleus (including a thioketone form), a 2-thio-2,4-thiazolidinedione nucleus, a 2-thio-2,4-oxazolidinedione nucleus, a 2-thio-2,5-thiazolidinedione nucleus, a 2,4-thiazolidinedione nucleus, a 2,4-imidazolidinedione nucleus, a 2-thio-2,4-imidazolidinedione nucleus, a 2-imidazolin-5-one nucleus, a 3,5-pyrazolidinedione nucleus, a benzothiophen-3-one nucleus, or an indanone nucleus.

It is preferable that $R^{11}$ represents a heterocyclic group. The heterocyclic group is preferably a pyrazole ring group, a thiazole ring group, an oxazole ring group, an imidazole ring group, an oxadiazole ring group, a thiadiazole ring group, a triazole ring group, a pyridine ring group, a pyridazine ring group, a pyrimidine ring group, a pyrazine ring group, benzo-fused or naphtho-fused ring groups thereof, or combinations of these fused rings.

$R^{13}$'s each independently represent a hydrogen atom, an alkyl group, an aryl group, a heteroaryl group, substituted boron, or a metal atom, and may form a covalent bond or a coordinate bond with $R^{11}$.

The substituent of the substituted boron represented by $R^{13}$ has the same definition as the above-described substituent regarding $R^{11}$ and $R^{12}$, and is preferably an alkyl group, an aryl group, or a heteroaryl group.

In addition, as the metal atom represented by $R^{13}$, a transition metal atom, a magnesium atom, an aluminum atom, a calcium atom, a barium atom, a zinc atom, or a tin atom is preferable, and an aluminum atom, a zinc atom, a tin atom, a vanadium atom, an iron atom, a cobalt atom, a nickel atom, a copper atom, a palladium atom, an iridium atom, or a platinum atom is more preferable.

$R^{14}$'s each independently represent a group having a mesogenic group. The definition of the mesogenic group is as described above.

$R^{14}$ is preferably a group represented by Formula (2). * represents a bonding position.

Formula (2) $*-M^1-(X^1-M^2)_n-X^2-P$

$M^1$ represents a substituted or unsubstituted arylene group or a substituted or unsubstituted heteroarylene group. Examples of the arylene group include a phenylene group.

$X^1$ and $X^2$ each independently represent a single bond, -O-, -CO-, $-CH_2-$, -CH=CH-, -C≡C-, $-NR^0-$, or a combination thereof (for example, -O-CO- and $-CH_2-CH_2-$). $R^0$ represents a hydrogen atom or an alkyl group having 1 to 5 carbon atoms.

$M^2$ represents a substituted or unsubstituted arylene group, a substituted or unsubstituted heteroarylene group, or a substituted or unsubstituted cycloalkylene group.

n represents 1 to 5. In particular, n is preferably 2 to 4.

P represents a hydrogen atom or a polymerizable group. The definition of the polymerizable group is the same as that of the polymerizable group which may be contained in the above-described liquid crystal compound.

Examples of a suitable aspect of the infrared absorbing dichroic substance include an oxonol-based coloring agent.

The oxonol-based coloring agent is preferably a compound represented by Formula (11).

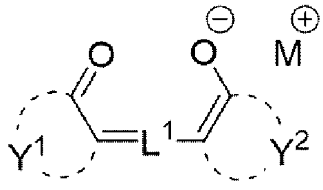

(11)

In Formula (11), $Y^1$ and $Y^2$ each independently represent a non-metal atomic group forming an aliphatic ring or a heterocyclic ring, $M^+$ represents a proton, a monovalent alkali metal cation, or an organic cation, $L^1$ represents a methine chain consisting of 5 or 7 methine groups, and a methine group at the center of the methine chain has a substituent represented by Formula A.

$*\text{-}S^A\text{-}T^A$ Formula (A)

In Formula (A), $S^A$ represents a single bond, an alkylene group, an alkenylene group, an alkynylene group, -O-, -S-, $-NR^{L1}-$, -C(=O)-, -C(=O)O-, $-C(=O)NR^{L1}-$, $-S(=O)_2-$, $-OR^{L2}-$, or a group formed by combining these groups; $R^{L1}$ represents a hydrogen atom, a halogen atom, an alkyl group, an aryl group, or a heteroaryl group; $R^{L2}$ represents an alkylene group, an arylene group, or a divalent heterocyclic group; $T^A$ represents a halogen atom, an alkyl group, a cycloalkyl group, an aryl group, a heteroaryl group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group; in a case where $S^A$ represents a single bond or an alkylene group and $T^A$ represents an alkyl group, the total number of carbon atoms included in $S^A$ and $T^A$ is 3 or more; and * represents a bonding site with the central methine group of the methine chain.

The oxonol-based coloring agent is more preferably a compound represented by Formula (12).

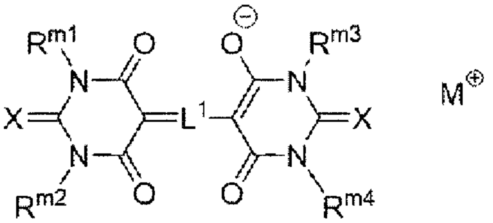

(12)

In Formula (12), $M^+$ and $L^1$ are the same as $M^+$ and $L^1$ in Formula (11).

$R^{m1}$, $R^{m2}$, $R^{m3}$, and $R^{m4}$ each independently represent a hydrogen atom, an alkyl group, an aryl group, or a heteroaryl group; and X's each independently represent an oxygen atom, a sulfur atom, or a selenium atom.

The oxonol-based coloring agent is still more preferably a compound represented by Formula (13).

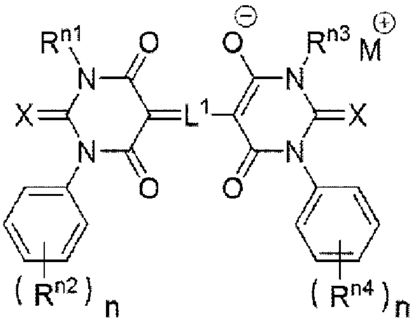

(13)

In Formula (13), $M^+$, $L^1$, and X are the same as $M^+$, $L^1$, and X in Formula (11).

$R^{n1}$ and $R^{n3}$ each independently represent a hydrogen atom, an alkyl group, an aryl group, or a heteroaryl group; $R^{n2}$ and $R^{n4}$ each independently represent an alkyl group, a halogen atom, an alkenyl group, an aryl group, a heteroaryl group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$; $R^{L3}$'s each independently represent a hydrogen atom, an alkyl group, an alkenyl group, an aryl group, or a heteroaryl group; and n's each independently represent an integer of 1 to 5.

Examples of a suitable aspect of the infrared absorbing dichroic substance include a cyanine-based coloring agent.

The cyanine-based coloring agent is preferably a compound represented by Formula (3) or a compound represented by Formula (4).

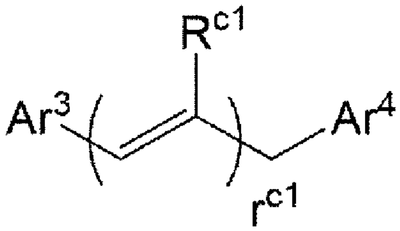

(3)

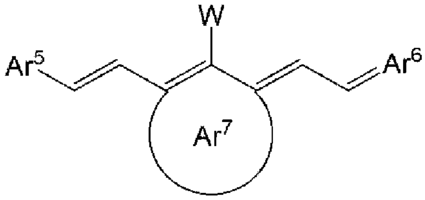

(4)

In Formula (3), $Ar^3$ and $Ar^4$ each independently represent a heterocyclic group which may have the specific substituent, and $R^{c1}$ represents a hydrogen atom or a substituent.

It is preferable that at least one of $Ar^3$ or $Ar^4$ represents a heterocyclic group having a substituent including a hydrophilic group (hereinafter, also referred to as "specific substituent").

Examples of the hydrophilic group include an acid group or a salt thereof, an onium base, a hydroxy group or a salt thereof, a sulfonamide group ($H_2N-SO_2-$) or a salt thereof, and a group including a polyoxyalkylene group; and an acid group or a salt thereof is preferable. Examples of the acid group or a salt thereof include a sulfo group ($-SO_3H$) or a salt thereof ($-SO_3^-M^+$; $M^+$ represents a cation), and a carboxyl group (-COOH) or a salt thereof ($-COO^-M^+$; $M^+$ represents a cation).

Examples of a heterocyclic ring constituting the heterocyclic group include an indolenine ring, a benzoindolenine ring, an imidazole ring, a benzimidazole ring, a naphthimidazole ring, thiazole ring, a benzothiazole ring, a naphthothiazole ring, a thiazoline ring, an oxazole ring, a benzoxazole ring, a naphthoxazole ring, an oxazoline ring, a selenazole ring, a benzoselenazole ring, a naphthoselenazole ring, and a quinoline ring; and an indolenine ring, a benzoindolenine ring, a benzothiazole ring, or a naphthothiazole ring is preferable.

The specific substituent may be substituted on a heteroatom in the heterocyclic ring, or may be substituted on a carbon atom in the heterocyclic ring.

The heterocyclic group may have one or two or more (for example, two or three) specific substituents.

$r^{c1}$ represents an integer of 1 to 7, and is preferably an integer of 3 to 5.

The type of the substituent represented by $R^{c1}$ is not particularly limited, examples thereof include known substituents, and an alkyl group which may have a substituent, an aryl group which may have a substituent, or a heteroaryl group which may have a substituent is preferable.

Examples of the substituent which may be included in the alkyl group, the aryl group, or the heteroaryl group include an alkyl group, an alkenyl group, an alkynyl group, an aryl group, an alkoxy group, an aryloxy group, an aromatic heterocyclic oxy group, an acyl group, an alkoxycarbonyl group, an aryloxycarbonyl group, an acyloxy group, an acylamino group, an alkoxycarbonylamino group, an aryloxycarbonylamino group, a sulfamoyl group, a carbamoyl group, an alkylthio group, an arylthio group, an aromatic heterocyclic thio group, a ureide group, a halogen atom, a cyano group, a nitro group, a heterocyclic group (for example, a heteroaryl group), a silyl group, and a group obtained by combining these groups (hereinafter, these groups are also collectively referred to as "substituent W"). The above-described substituent may be further substituted with the substituent W.

In Formula (4), $Ar^5$ and $Ar^6$ each independently represent a heterocyclic group which may have the specific substituent; $Ar^7$ represents a cyclic skeleton having 5 to 7 carbon atoms; and W represents a hydrogen atom, a halogen atom, a methyl group, a phenyl group which may have a substituent, a benzyl group which may have a substituent, a pyridyl group, a morpholyl group, a piperidyl group, a phenylamino group which may have a substituent, a phenoxy group which may have a substituent, an alkylthio group which may have a substituent, or a phenylthio group which may have a substituent.

It is preferable that at least one of $Ar^5$ or $Ar^6$ represents a heterocyclic group having the specific substituent.

Examples of a heterocyclic ring constituting the heterocyclic group include an indolenine ring, a benzoindolenine ring, an imidazole ring, a benzimidazole ring, a naphthimidazole ring, thiazole ring, a benzothiazole ring, a naphthothiazole ring, a thiazoline ring, an oxazole ring, a benzoxazole ring, a naphthoxazole ring, an oxazoline ring, a selenazole ring, a benzoselenazole ring, a naphthoselenazole ring, and a quinoline ring; and an indolenine ring, a benzoindolenine ring, a benzothiazole ring, or a naphthothiazole ring is preferable.

Examples of the substituent which may be included in the phenyl group, the benzyl group, the phenylamino

group, the phenoxy group, the alkylthio group, or the phenylthio group represented by W include the groups exemplified by the substituent W described above, a hydrophilic group, and the specific substituent.

The number of carbon atoms in the alkylthio group represented by W is not particularly limited, but is preferably 1 to 5 and more preferably 1 to 3.

The compound represented by Formula (4) is preferably an intramolecular salt type having a cation and an anion in one molecule or an intermolecular salt type; and examples of the intermolecular salt type include a halide salt, perchlorate, fluoroantimonate, fluorophosphate, fluoroborate, trifluoromethanesulfonate, bis(trifluoromethane)sulfonic acid imide salt, and organic salts of naphthalene sulfonic acid or the like.

Specific examples thereof include indocyanine green and water-soluble coloring agents described in JP1988-033477A (JP-S63-033477A).

The compound represented by Formula (4) is preferably a compound represented by Formula (4-1).

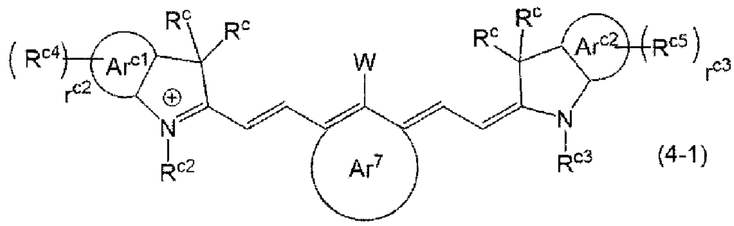

(4-1)

In Formula (4-1), $R^{c2}$ to $R^{c5}$ each independently represent a hydrogen atom or a substituent. At least one of $R^{c2}$ to $R^{c5}$ preferably represents a substituent having $-SO_3^-$ (for example, an alkyl group having $-SO_3^-$; the number of carbon atoms in the alkyl group is preferably 1 to 10), a substituent having $-COO^-$ (for example, an alkyl group having $-COO^-$; the number of carbon atoms in the alkyl group is preferably 1 to 10), $-SO_3^-$, or $-COO^-$.

$R^c$'s each independently represent a hydrogen atom or a substituent. Examples of the substituent represented by $R^c$ include the groups exemplified by the substituent W, and an alkyl group is preferable. The number of carbon atoms in the above-described alkyl group is preferably 1 to 5.

$Ar^{c1}$ and $Ar^{c2}$ each independently represent an aromatic hydrocarbon ring (for example, a benzene ring or a naphthalene ring); $Ar^7$ represents a cyclic skeleton having 5 to 7 carbon atoms; W represents a hydrogen atom, a halogen atom, a methyl group, a phenyl group which may have a substituent, a benzyl group which may have a substituent, a pyridyl group, a morpholyl group, a piperidyl group, a phenylamino group which may have a substituent, a phenoxy group which may have a substituent, an alkylthio group which may have a substituent, or a phenylthio group which may have a substituent; $r^{c2}$ represents an integer of 1 to 3; and $r^{c3}$ represents an integer of 1 to 3.

Examples of the substituent represented by $R^{c2}$ to $R^{c5}$ include the groups exemplified by the substituent W, and the specific substituent.

Examples of the substituent which may be included in the phenyl group, the benzyl group, the phenylamino group, the phenoxy group, the alkylthio group, or the phenylthio group represented by W include the groups exemplified by the substituent W, and the specific substituent.

A content of the infrared absorbing dichroic substance in the composition is not particularly limited, but is preferably 5% to 70% by mass and more preferably 10% to 50% by mass with respect to the total mass of the liquid crystal compound from the viewpoint of further improving the effects of the present invention.

<Other components>

The above-described composition may contain a component other than the liquid crystal compound and the infrared absorbing dichroic substance described above.

The composition may contain a polymerization initiator. The polymerization initiator used is selected according to the type of polymerization reaction, and examples thereof include a thermal polymerization initiator and a photopolymerization initiator. Examples of the photopolymerization initiator include an $\alpha$-carbonyl compound, acyloin ether, an $\alpha$-hydrocarbon-substituted aromatic acyloin compound, a polynuclear quinone compound, and a combination of a triarylimidazole dimer and p-aminophenyl ketone.

A content of the polymerization initiator in the composition is preferably 0.01% to 20% by mass and more preferably 0.5% to 10% by mass with respect to the total solid content of the composition.

In addition, the composition may contain a polymerizable monomer.

Examples of the polymerizable monomer include radically polymerizable compounds and cationically polymerizable compounds. In particular, a polyfunctional radically polymerizable monomer is preferable. In addition, as the polymerizable monomer, a monomer which is copolymerizable with the above-described liquid crystal compound having a polymerizable group is preferable. Examples thereof include polymerizable monomers described in paragraphs [0018] to

[0020] of JP2002-296423A.

A content of the polymerizable monomer in the composition is preferably 1% to 50% by mass and more preferably 2% to 30% by mass with respect to the total mass of the liquid crystal compound.

In addition, the composition may contain a surfactant.

Examples of the surfactant include known compounds in the related art, and a fluorine-based compound is particularly preferable. Examples thereof include compounds described in paragraphs [0028] to [0056] of JP2001-330725A and compounds described in paragraphs [0069] to [0126] of JP2003-295212A.

In addition, the composition may contain a solvent. As the solvent, an organic solvent is preferable. Examples of the organic solvent include amides (for example, N,N-dimethylformamide), sulfoxides (for example, dimethyl sulfoxide), heterocyclic compounds (for example, pyridine), hydrocarbons (for example, benzene and hexane), alkyl halides (for example, chloroform and dichloromethane), esters (for example, methyl acetate, ethyl acetate, and butyl acetate), ketones (for example, acetone and methyl ethyl ketone), and ethers (for example, tetrahydrofuran and 1,2-dimethoxyethane). Two or more organic solvents may be used in combination.

In addition, the composition may contain various alignment controllers such as a vertical alignment agent and a horizontal alignment agent. These alignment control agents are compounds which can control horizontal alignment or vertical alignment of the liquid crystal compound on an interface side.

Furthermore, the composition may contain an adhesion improver, a plasticizer, or a polymer, in addition to the above-described components.

<Forming method>

A method of forming the second polarizing filter using the above-described composition is not particularly limited, and known methods are exemplified.

In particular, from the viewpoint of easily controlling in-plane retardation, a method including applying a composition containing the liquid crystal compound having a polymerizable group (hereinafter, simply also referred to as "polymerizable liquid crystal compound") and the infrared absorbing dichroic substance to form a coating film, subjecting the coating film to an alignment treatment to align the polymerizable liquid crystal compound, and subjecting the obtained coating film to a curing treatment (an ultraviolet radiation treatment (light irradiation treatment) or a heat treatment) to form a light absorption anisotropic film is preferable.

Hereinafter, the procedure of the above-described method will be described in detail.

First, the composition is applied onto a support to form a coating film, and the coating film is subjected to an alignment treatment to align the polymerizable liquid crystal compound.

The composition to be used contains the polymerizable liquid crystal compound. The definition of the polymerizable liquid crystal compound is as described above.

A support to be used is a member having a function as a base material for applying the composition. The support may be a temporary support which is peeled off after applying and curing the composition.

As the support (temporary support), a plastic film, a glass substrate, or the like may be used. Examples of a material constituting the plastic film include a polyester resin such as polyethylene terephthalate (PET), a polycarbonate resin, a (meth)acrylic resin, an epoxy resin, a polyurethane resin, a polyamide resin, a polyolefin resin, a cellulose derivative, a silicone resin, and polyvinyl alcohol (PVA).

A thickness of the support may be approximately 5 to 1,000 μm, preferably 10 to 250 μm and more preferably 15 to 90 μm.

As necessary, an alignment layer may be disposed on the support.

The alignment layer generally contains a polymer as a main component. The polymer for the alignment layer is described in a large number of documents, and a large number of commercially available polymer products are available. As the polymer for the alignment layer, polyvinyl alcohol, polyimide, or a derivative thereof is preferable.

It is preferable that the alignment layer is subjected to a known rubbing treatment.

A thickness of the alignment layer is preferably 0.01 to 10 μm and more preferably 0.01 to 1 μm.

Examples of a method of applying the composition include a curtain coating method, a dip coating method, a spin coating method, a printing coating method, a spray coating method, a slot coating method, a roll coating method, a slide coating method, a blade coating method, a gravure coating method, and a wire bar method. Even in a case where the composition is applied by any of the methods, single layer coating is preferable.

The coating film formed on the support is subjected to an alignment treatment to align the polymerizable liquid crystal compound in the coating film.

The alignment treatment can be performed by drying the coating film at room temperature or by heating the coating film. In a case of a thermotropic liquid crystal compound, a liquid crystal phase formed by the alignment treatment can generally be transferred by a change in temperature or pressure. In a case of a lyotropic liquid crystal compound, a liquid crystal phase formed by the alignment treatment can also be transferred by a compositional ratio such as an amount

of solvent.

Conditions in a case of heating the coating film are not particularly limited, and the heating temperature is preferably 50°C to 250°C and more preferably 50°C to 150°C, and the heating time is preferably 10 seconds to 10 minutes.

In addition, after the coating film is heated, the coating film may be cooled as necessary, before a curing treatment (light irradiation treatment) described later. The cooling temperature is preferably 20°C to 200°C and more preferably 30°C to 150°C.

A difference between the above-described heating temperature of the coating film and the above-described cooling temperature of the coating film is not particularly limited, and is preferably 40°C or higher. The upper limit thereof is not particularly limited, and is, for example, 150°C or lower.

In a case where the coating film is heated and cooled before performing the curing treatment, it is preferable that the heating temperature $T_A$ of the coating film is 50°C to 250°C and the cooling temperature $T_B$ is in a range of the heating temperature $T_A \times 0.4$ to the heating temperature $T_A \times 0.7$.

Next, the coating film in which the polymerizable liquid crystal compound is aligned is subjected to a curing treatment.

A method of the curing treatment performed on the coating film in which the polymerizable liquid crystal compound is aligned is not particularly limited, and examples thereof include a light irradiation treatment and a heat treatment. Among these, from the viewpoint of manufacturing suitability, a light irradiation treatment is preferable, and an ultraviolet irradiation treatment is more preferable.

Irradiation conditions of the light irradiation treatment are not particularly limited, and an irradiation amount of 50 to 1,000 mJ/$cm^2$ is preferable.

In the above-described forming method, by adjusting various conditions, an arrangement state of the infrared absorbing dichroic substance can be adjusted, and as a result, optical characteristics of the light absorption anisotropic film can be adjusted.

For example, by adjusting the heating temperature in a case of aligning the liquid crystal compound after the coating film is formed by applying the composition onto the support and adjusting the cooling temperature in a case of cooling the coating film after the heating, the arrangement state of the infrared absorbing dichroic substance can be adjusted, and as a result, the optical characteristics of the light absorption anisotropic film can be adjusted. The second circular polarizing filter can be formed by the same forming method as the second polarizing filter described above, and thus the detailed description thereof will be omitted.

The present invention is basically configured as described above. The imaging system according to the embodiment of the present invention has been described in detail above, but the present invention is not limited to the above-described embodiments, and various improvements and changes can be made without departing from the spirit of the present invention.

## Examples

Hereinafter, the characteristics of the present invention will be described in detail by Examples. The materials, reagents, amounts and proportions of substances, operations, and the like described in the following examples can be appropriately modified as long as the gist of the present invention is maintained. Therefore, the scope of the present invention is not limited to Examples below.

In the present examples, noise of a captured image was evaluated for imaging systems of Examples 1 to 11 and Comparative Examples 1 and 2. The results are shown in Table 1.

The imaging systems of Examples 1 to 11 and Comparative Examples 1 and 2 were the imaging system 10 shown in FIG. 1, and the types of the second polarizing filters and the positions of the second polarizing filters were different.

As the light source 12, an LED lamp (WindFire Mini IR Lamp Zoomable 5W 850nm/940nm LED Infrared Flashlight Night Vision) having a wavelength of 850 nm was used.

As the imaging device 14, a camera to which a lens was attached was used. As the lens, Lensation, B5M6018 (manufactured by IDS Corporation), 6 mm, 1/2.5" was used. As the camera, daA3840-45uc (manufactured by Basler AG) was used.

The imaging systems of Examples 1 to 11 and Comparative Examples 1 and 2 will be described.

### (Example 1)

In Example 1, the second polarizing filter 24 was disposed at the pupil position of the imaging system 10 shown in FIG. 1.

The following LCF was used as the second polarizing filter 24. A haze of the LCF was 0.8.

Hereinafter, the LCF will be described. The LCF was an absorption type linear polarizer.

(LCF)

A cellulose acylate film T1 ("TD40UL" (manufactured by FUJIFILM Corporation) passed through a gap between dielectric heating rolls at a temperature of 60°C to increase a film surface temperature to 40°C.

Next, an alkali solution having a composition shown below was applied to a single surface of the film using a bar coater in an application amount of 14 ml/$m^2$, and the film was heated to 110°C.

Next, the obtained film was transported for 10 seconds under a steam far infrared heater (manufactured by Noritake Co., Ltd.).

Next, a surface of the film was coated with pure water such that the coating amount reached 3 ml/$m^2$ using the same bar coater.

Next, the obtained film was washed with water by a fountain coater and drained by an air knife three times, and then transported to a drying zone at 70°C for 10 seconds and dried to produce a cellulose acylate film subjected to an alkali saponification treatment as a support.

| (Alkaline solution) | |
|---|---|
| · Potassium hydroxide | 4.7 parts by mass |
| · Water | 15.8 parts by mass |
| · Isopropanol | 63.7 parts by mass |
| · Surfactant ($C_{14}H_{29}O(CH_2CH_2O)_{20}H$) | 1.0 part by mass |
| · Propylene glycol | 14.8 parts by mass |

An alignment layer coating liquid having the following formulation was continuously applied onto the above-described support using a #14 wire bar.

Next, the support on which the coating film had been formed was dried using hot air at 60°C for 60 seconds and was dried using hot air at 100°C for 120 seconds.

Next, the dried coating film was continuously rubbed to form an alignment layer. At this time, a longitudinal direction and a transport direction of the elongated film were parallel to each other, and a rotation axis of a rubbing roller with respect to the longitudinal direction of the film was set to 45° clockwise.

| (Alignment layer coating liquid) | |
|---|---|
| · Modified polyvinyl alcohol shown below | 10.0 parts by mass |
| · Water | 371.0 parts by mass |
| · Methanol | 119.0 parts by mass |
| · Glutaraldehyde | 0.5 parts by mass |
| · Polymerization initiator (IRGACURE 2959, manufactured by BASF) | 0.3 part by mass |

Modified polyvinyl alcohol (in the following structural formula, the proportion is a molar ratio)

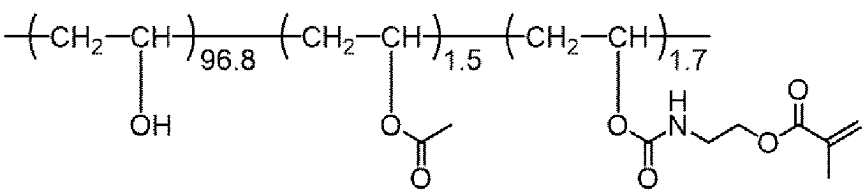

The following coating liquid for a light absorption anisotropic film was prepared.

| (Coating liquid for light absorption anisotropic film) | |
|---|---|
| · Liquid crystal compound L-1 shown below | 80 parts by mass |
| · Infrared absorbing coloring agent IR-2 | 20 parts by mass |
| · Photopolymerization Initiator 1 (IRGACURE OXE01, manufactured by BASF) | 3.0 parts by mass |
| · Photopolymerization initiator 2 (IRGACURE 184, manufac tured by BASF) | 3.0 parts by mass |
| · Fluorine-containing compound F-1 shown below | 0.2 parts by mass |

(continued)

| (Coating liquid for light absorption anisotropic film) | |
|---|---|
| · Cyclopentanone | 227.1 parts by mass |

Liquid crystal compound L-1 (mixture of the following three kinds of compounds; a mixing ratio is described on the upper left side of the compound)

83%

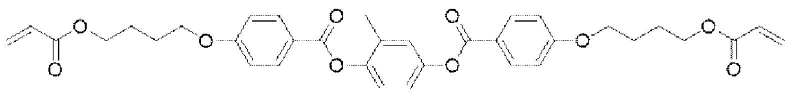

15%

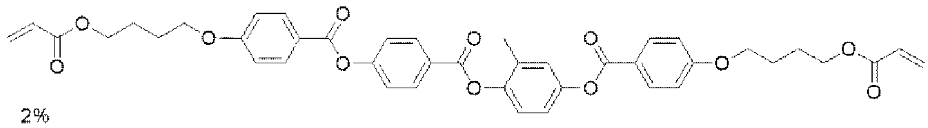

2%

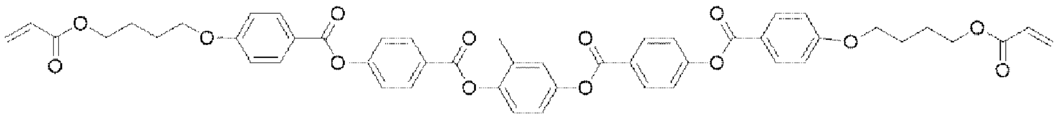

Infrared absorbing coloring agent IR-2

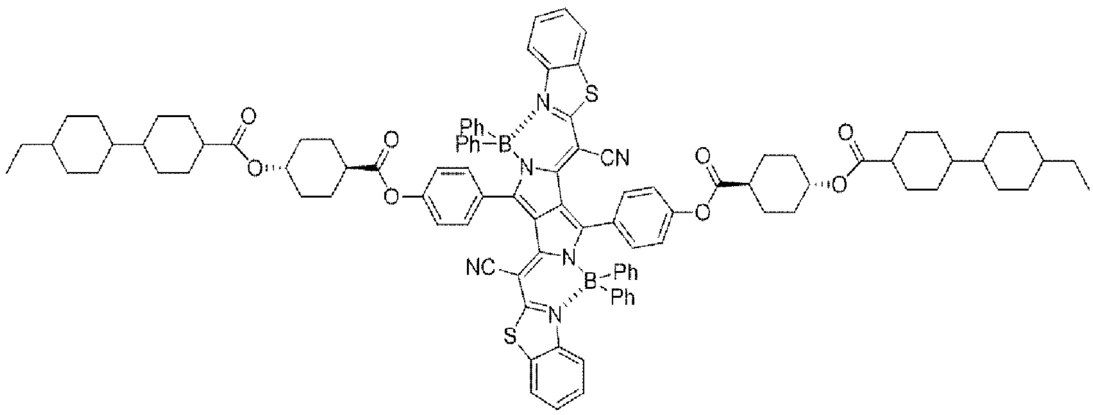

Fluorine-containing compound F-1

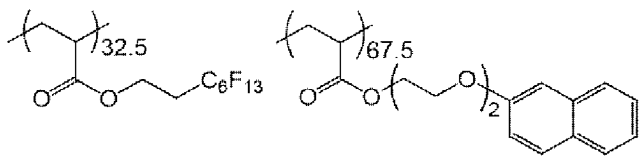

The above-described coating liquid for a light absorption anisotropic film was applied onto the above-described alignment layer with a wire bar to form a coating film, and the coating film was heated at 100°C for 5 minutes and cooled to 60°C.

Thereafter, nitrogen purge was carried out so as to create an atmosphere with an oxygen concentration of 1.0% by volume or less, and the coating film was irradiated with ultraviolet rays at an irradiation dose of 500 mJ/$cm^2$ using a high-pressure mercury lamp to produce the LCF. A thickness of the obtained LCF (excluding the support and the alignment

layer) was 5 μm.

(Example 2)

Example 2 was the same as Example 1, except that a light absorption anisotropic film 1 was provided instead of the LCF. A haze of the light absorption anisotropic film 1 was 0.8. The light absorption anisotropic film 1 was an absorption type linear polarizer.

Hereinafter, the light absorption anisotropic film 1 will be described.

(Light absorption anisotropic film 1)

A composition 1 having the following composition was prepared.

| Composition 1 | |
|---|---|
| Rod-like compound I-1 | 10 parts by mass |
| Infrared absorbing coloring agent IR-1 | 1 part by mass |
| Water | 89 parts by mass |

Rod-like compound I-1 (see the following structural formula)

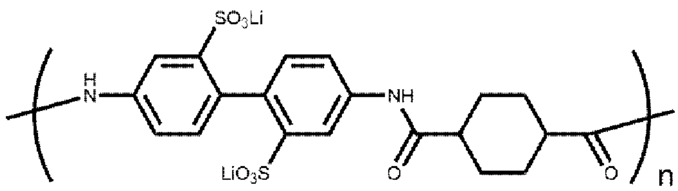

Infrared absorbing coloring agent IR-1 (see the following structural formula)

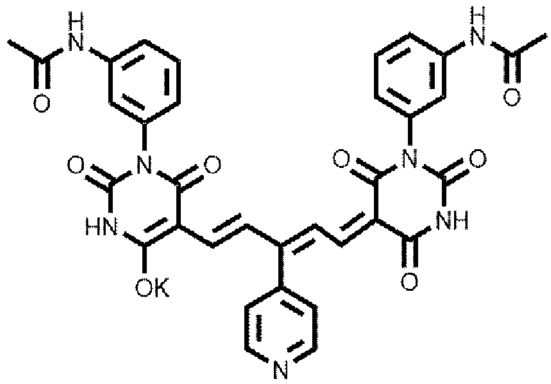

The composition 1 (5 g) prepared as described above and zirconia beads (20 g) having an average particle diameter of 2 mm were filled in a zirconia 45 mL container, and using a planetary ball mill P-7 classic line manufactured by Frisch GmbH, milling was carried out for 50 minutes at a rotation speed of 300 revolutions per minute (rpm).

The composition 1 which had been subjected to the milling treatment described above was applied onto a glass substrate as a base material with a wire bar (moving speed: 100 cm/s), and naturally dried.

Next, the obtained composition layer was immersed in a 1 mol/L calcium chloride aqueous solution for 5 seconds, washed with ion exchange water, and blast-dried to fix the alignment state, thereby producing a light absorption anisotropic film 1 having a film thickness of 1.2 μm.

(Example 3)

Example 3 was the same as Example 1, except that the second polarizing filter was disposed at the image side position.

(Example 4)

Example 4 was the same as Example 2, except that the second polarizing filter was disposed at the image side position.

(Example 5)

Example 5 was the same as Example 1, except that a wire grid polarizer and a louver were used instead of the LCF of the second polarizing filter.
The wire grid polarizer was a reflective type linear polarizer. WGF (registered trademark) manufactured by Asahi Kasei Corporation was used as the wire grid polarizer. A louver manufactured by 3M Company was used as the louver.
In Table 1, the wire grid polarizer is indicated as "WG". In addition, in Table 1, the combination of the wire grid polarizer and the louver is indicated as "WG + louver".
In Example 5, the lens 20, the louver, the wire grid polarizer, and the lens 22 were arranged in this order. A transmission axis of the wire grid polarizer and a light shielding axis of the louver were arranged to be orthogonal to each other. The light shielding axis of the louver was disposed in a direction which cut light incident from an oblique direction.

(Example 6)

Example 6 was the same as Example 5, except that the louver was not provided.

(Example 7)

Example 7 was the same as Example 6, except that the second polarizing filter was disposed at the image side position.

(Example 8)

Example 8 was the same as Example 2, except that a light absorption anisotropic film 2 was used instead of the light absorption anisotropic film 1 of the second polarizing filter.
Hereinafter, the light absorption anisotropic film 2 will be described. A haze of the light absorption anisotropic film 2 was 3.

(Light absorption anisotropic film 2)

The light absorption anisotropic film 2 was produced in the same manner as the light absorption anisotropic film 1, except that the above-described milling treatment time of the light absorption anisotropic film 1 was changed to 5 minutes. The light absorption anisotropic film 2 was an absorption type linear polarizer as in the light absorption anisotropic film 1.

(Example 9)

Example 9 was the same as Example 1, except that the second polarizing filter was disposed at the target object side position, that is, the target object 13 side of the lens 20 shown in FIG. 1.

(Example 10)

Example 10 was the same as Example 1, except that a circular polarizing plate was used instead of the LCF of the second polarizing filter, and the circular polarizing plate was disposed at the target object side position, that is, the target object 13 side of the lens 20 shown in FIG. 1. The circular polarizing plate corresponds to the second circular polarizing filter.
Hereinafter, the circular polarizing plate will be described. The circular polarizing plate was obtained by combining a linear polarizer and a $\lambda/4$ plate.

<Production of circular polarizing plate>

<<Production of linear polarizer>>

A composition 1 having the following composition was prepared. The composition 1 was a composition exhibiting lyotropic liquid crystallinity.

| Composition 1 | |
|---|---|
| Dichroic coloring agent III-2 | 5 parts by mass |
| Water | 95 parts by mass |

Dichroic coloring agent III-2

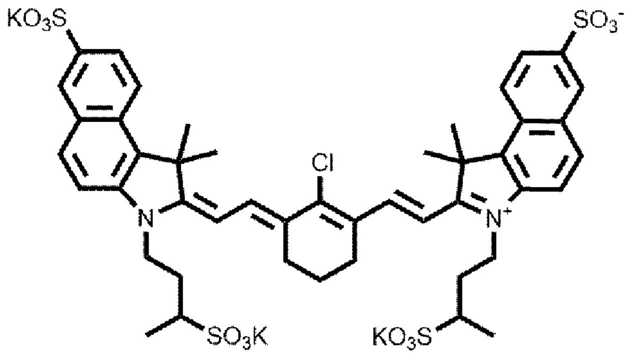

The composition 1 (5 g) prepared above and zirconia beads (20 g) having an average particle diameter of 2 mm were filled in a zirconia 45 mL container, and using a planetary ball mill P-7 classic line manufactured by Frisch GmbH, milling was performed for 50 minutes at a rotation speed of 300 rpm.

The composition 1 which had been subjected to the milling treatment described above was applied onto a glass substrate as a base material with a wire bar (moving speed: 100 cm/s), and naturally dried. Next, the obtained composition layer was immersed in a 1 mol/L calcium chloride aqueous solution for 5 seconds, washed with ion exchange water, and blast-dried to fix the alignment state, thereby producing a light absorption anisotropic film 1 (linear polarizer) having a film thickness of 200 nm.

The produced light absorption anisotropic film 1 acted as an absorption type linear polarizer with respect to light having a wavelength of 940 nm.

<<Production of λ/4 plate>>

[Production of optically anisotropic layer]

A composition H1 for forming an optically anisotropic layer was prepared with the following formulation, dissolved by heating at 50°C for 3 hours with stirring, and filtered through a 0.45 μm filter.

| Composition H1 for forming optically anisotropic layer | |
|---|---|
| · Liquid crystal compound H1 shown below | 75.5 parts by mass |
| · Polymerization initiator IRGACURE 819 (manufactured by BASF) | 0.8 parts by mass |
| · Surfactant F-1 shown above | 0.6 parts by mass |
| · Cyclopentanone | 274.5 parts by mass |

Liquid crystal compound H1 (mixture of the following three kinds of compounds; a mixing ratio (mass ratio) is described on the upper left side of the compound)

83%

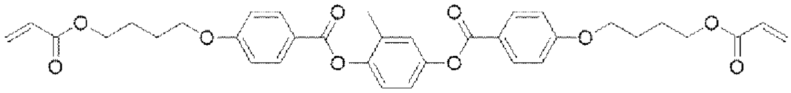

15%

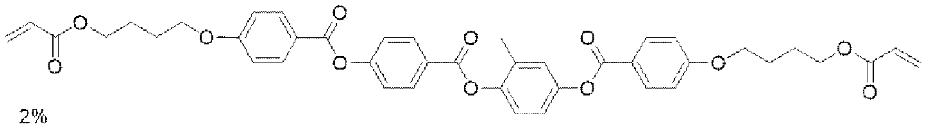

2%

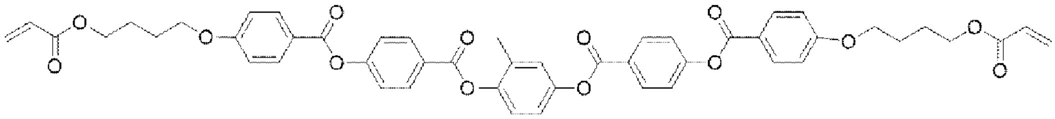

(Production of transparent support)

-Production of core layer cellulose acylate dope-

The following composition was put into a mixing tank and stirred to dissolve each component, thereby preparing a cellulose acetate solution used as a core layer cellulose acylate dope.

| Core layer cellulose acylate dope | |
|---|---|
| · Cellulose acetate having acetyl substitution degree of 2.88 | 100 parts by mass |
| · Polyester compound B described in Examples of JP2015-2 27955A | 12 parts by mass |
| · Compound F shown below | 2 parts by mass |
| · Methylene chloride (first solvent) | 430 parts by mass |
| · Methanol (second solvent) | 64 parts by mass |

Compound F

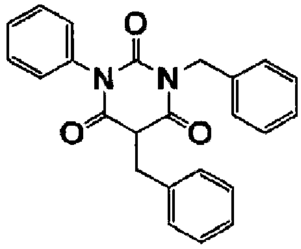

-Production of outer layer cellulose acylate dope-

10 parts by mass of the following matting agent solution was added to 90 parts by mass of the core layer cellulose acylate dope to prepare a cellulose acetate solution to be used as an outer layer cellulose acylate dope.

| Matting agent solution | |
|---|---|
| · Silica particles having an average particle diameter of 20 nm (AEROSIL R972, manufactured by Nippon Aerosil Co., Ltd.) | 2 parts by mass |
| · Methylene chloride (first solvent) | 76 parts by mass |
| · Methanol (second solvent) | 11 parts by mass |
| · Core layer cellulose acylate dope described above | 1 part by mass |

-Production of cellulose acylate film 1-

The core layer cellulose acylate dope and the outer layer cellulose acylate dope were filtered through filter paper having an average hole diameter of 34 μm and a sintered metal filter having an average pore size of 10 μm, and three layers which were the core layer cellulose acylate dope and the outer layer cellulose acylate dopes provided on both sides of the core layer cellulose acylate dope were simultaneously cast from a casting port onto a drum at 20°C (band casting machine). Next, the film was peeled off in a state where the solvent content was approximately 20% by mass, both ends of the film in the width direction were fixed by tenter clips, and the film was dried while being stretched at a stretching ratio of 1.1 times in the lateral direction. Thereafter, the film was further dried by being transported between the rolls of the heat treatment device to produce an optical film (transparent support) having a thickness of 40 μm, and the optical film was used as a cellulose acylate film 1. An in-plane retardation of the obtained cellulose acylate film 1 was 0 nm.

(Formation of photo-alignment film PA1)

The cellulose acylate film 1 was continuously coated with a coating liquid PA1 for forming a photo-alignment film described below with a wire bar. The support on which the coating film had been formed was dried with hot air at 140°C for 120 seconds, and the coating film was irradiated with polarized ultraviolet rays (10 $mJ/cm^2$, using an ultra-high pressure mercury lamp) to form a photo-alignment film PA1, thereby obtaining a triacetyl cellulose (TAC) film with the photo-alignment film. A film thickness of the photo-alignment film PA1 was 0.5 μm.

| Coating liquid PA1 for forming photo-alignment film | |
|---|---|
| · Polymer PA-1 shown below | 100.00 parts by mass |
| · Acid generator PAG-1 shown below | 8.25 parts by mass |
| · Stabilizer DIPEA shown below | 0.6 parts by mass |
| · Xylene | 1126.60 parts by mass |
| · Methyl isobutyl ketone | 125.18 parts by mass |

Polymer PA-1

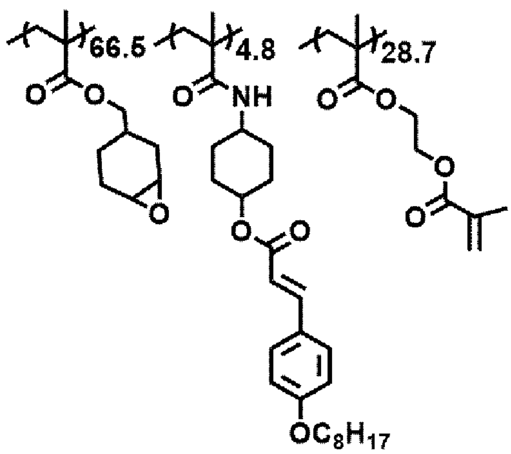

Acid generator PAG-1

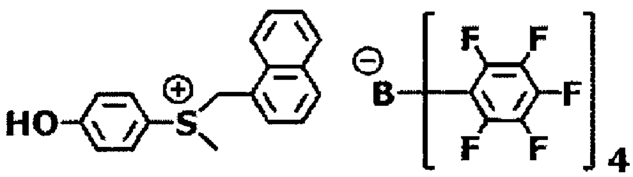

Stabilizer DIPEA

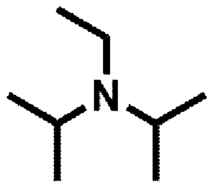

A coating layer H1 was formed by continuously coating the obtained photo-alignment film PA1 with the above-described composition H1 for forming an optically anisotropic film with a wire bar. Next, the coating layer H1 was heated at 100°C for 5 minutes, and then was cooled to 60°C to form a dried coating film. In the dried coating film, the liquid crystal compound was in a nematic phase. Thereafter, the coating layer was irradiated with an LED lamp (central wavelength of 365 nm) for 2 seconds under an irradiation condition of an illuminance of 200 mW/cm$^2$, thereby producing an optically anisotropic layer H1 on the photo-alignment film PA1. A film thickness of the optically anisotropic layer H1 was 1.9 μm.
The produced optically anisotropic layer H1 acted as a λ/4 retardation layer with respect to light having a wavelength of 940 nm.

[Production of positive C-plate]

The above-described cellulose acylate film 1 was used as a temporary support. After passing the cellulose acylate film 1 through a dielectric heating roll at a temperature of 60°C to raise the film surface temperature to 40°C, an alkaline solution having the formulation shown below was applied onto one surface of the film using a bar coater at a coating amount of 14 ml/m$^2$, followed by heating to 110°C, and transportation of the film under a steam type far-infrared heater manufactured by NORITAKE CO., LIMITED for 10 seconds. Next, the film was coated with pure water such that the coating amount reached 3 ml/m$^2$ using the same bar coater. Next, the film was washed with water by a fountain coater and drained by an air knife three times, and then transported to a drying zone at 70°C for 10 seconds and dried to produce a cellulose acylate film 1 subjected to an alkali saponification treatment.

| (Alkaline solution) | |
|---|---|
| · Potassium hydroxide | 4.7 parts by mass |
| · Water | 15.8 parts by mass |
| · Isopropanol | 63.7 parts by mass |
| · Fluorine-containing surfactant SF-1 ($C_{14}H_{29}O(CH_2CH_{20})_{20}H$) | 1.0 part by mass |
| · Propylene glycol | 14.8 parts by mass |

The cellulose acylate film 1 which had been subjected to the above-described alkali saponification treatment was continuously coated with a coating liquid 2 for forming an alignment layer, having the following formulation, using a #16 wire bar. The cellulose acylate film 1 on which the coating film was formed was dried with hot air at 60°C for 60 seconds, and further dried with hot air at 100°C for 120 seconds to form an alignment layer.

| (Coating liquid 2 for forming alignment layer) | |
|---|---|
| · Polyvinyl alcohol (PVA103 manufactured by Kuraray CoLtd.) | 2.4 parts by mass |
| · Isopropyl alcohol | 1.6 parts by mass |
| · Methanol | 36 parts by mass |
| · Water | 60 parts by mass |

The alignment layer was coated with the following coating liquid C1 for forming a positive C-plate, having the following formulation, the obtained coating film was aged at 60°C for 60 seconds and irradiated with ultraviolet rays at an illuminance of 1000 mJ/cm$^2$ in the air using an air-cooled metal halide lamp at an illuminance of 70 mW/cm$^2$ (manufactured by Eye Graphics Co., Ltd.), and the alignment state thereof was fixed to vertically align the liquid crystal compound, thereby producing a TAC film having a positive C-plate C1. Rth(550) of the obtained positive C-plate C1 was -130 nm.

| (Coating liquid C1 for forming positive C-plate) | |
|---|---|
| · Liquid crystal compound L-11 shown below | 80 parts by mass |
| · Liquid crystal compound L-12 shown below | 20 parts by mass |
| · Vertical alignment agent (S01) for liquid crystal compound shown below | 1 part by mass |
| · Ethylene oxide-modified trimethylolpropane triacrylate(V#360, manufactured by Osaka Organic Chemical Industry Ltd.) | 8 parts by mass |
| · IRGACURE 907 (manufactured by BASF) | 3 parts by mass |
| · KAYACURE DETX (manufactured by Nippon Kayaku Co., Ltd.) | 1 part by mass |
| · Compound B03 shown below | 0.4 parts by mass |
| · Methyl ethyl ketone | 170 parts by mass |
| · Cyclohexanone | 30 parts by mass |

Liquid crystal compound L-11 and liquid crystal compound L-12

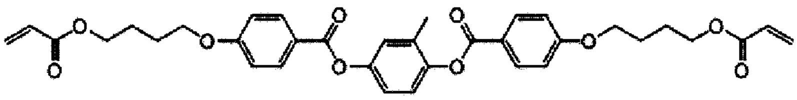

L-11

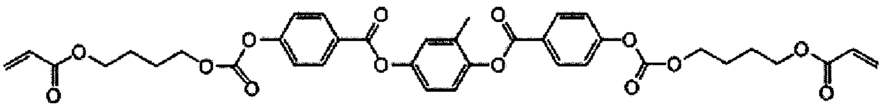

L-12

Vertical alignment agent (S01) for liquid crystal compound

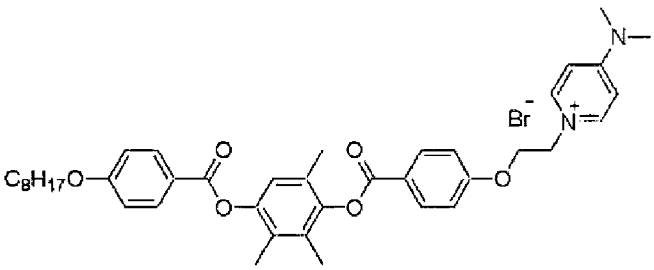

S 0 1

Compound B03

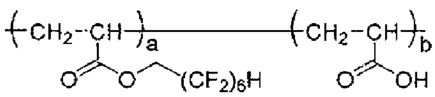

B 0 3

Using the following UV adhesive composition, the positive C-plate C1 side of the TAC film having the positive C-plate C1 produced as described above was bonded to the optically anisotropic layer side of the TAC film having the above-described optically anisotropic layer H1, and the alignment layer and the cellulose acylate film 1 on the optically anisotropic layer H1 side were removed to obtain a laminate (λ/4 plate) including a retardation layer (the optically anisotropic layer H1

and the positive C-plate C1).

(Preparation of UV adhesive composition)

The following UV adhesive composition was prepared.

| UV adhesive composition | |
|---|---|
| · CEL2021P (manufactured by Daicel Corporation) | 70 parts by mass |
| · 1,4-Butanediol diglycidyl ether | 20 parts by mass |
| · 2-Ethylhexyl glycidyl ether | 10 parts by mass |
| · CPI-100P shown below | 2.25 parts by mass |

CPI-100P

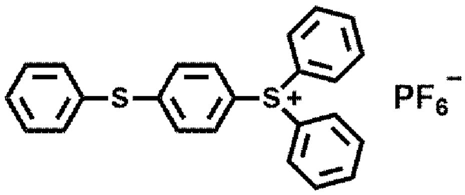

Refractive indices nx, ny, and nz of the produced λ/4 plate were measured using an Abbe refractometer (NAR-4T, manufactured by Atago Co., Ltd.) using a sodium lamp (λ = 589 nm) as a light source. From the measured values of the refractive indices nx, ny, and nz, an Nz factor: Nz = (nx - nz)/(nx - ny) was calculated. The refractive indices nx, ny, and nz were substituted with each refractive index at a wavelength of 550 nm. The Nz factor was 0.5.

The produced λ/4 plate was conditioned by being left at 20°C and 65 %RH for 24 hours, cut into a size of 200 mm × 15 mm in the flow direction (MD) and width direction (TD) used in a case of applying the composition H1 for forming an optically anisotropic layer, attached to a tensile tester (tensile tester "AG-IS", manufactured by Shimadzu Corporation) at a chuck interval of 100 mm, and subjected to a tensile test at a tensile rate of 1,000 mm/min under conditions of 20°C and 65 %RH, and then a tensile modulus was calculated from the ratio of the obtained initial stress to the initial strain. The tensile modulus was $2.0 \times 10^3$ MPa.

<<Lamination of linear polarizer and λ/4 plate>>

A pressure sensitive adhesive (SK-2057, manufactured by Soken Chemical & Engineering Co., Ltd.) was applied onto the surface of the λ/4 plate on the optically anisotropic layer H1 side to form a pressure sensitive adhesive layer, and a surface of the linear polarizer (light absorption anisotropic film 1) opposite to the glass substrate was adhered to the pressure sensitive adhesive layer so as to be in close contact with the surface, thereby obtaining a circular polarizing plate. An orientation of a slow axis of the optically anisotropic layer H1 and an absorption axis of the light absorption anisotropic film 1 was set to 45°. In this manner, the circular polarizing plate was produced.

(Example 11)

Example 11 was the same as Example 1, except that a circular polarizing plate (cholesteric reflective type) was used instead of the LCF of the second polarizing filter, and the second polarizing filter was disposed at the target object side position, that is, the target object 13 side of the lens 20 shown in FIG. 1.

Hereinafter, the circular polarizing plate will be described.

(Formation of alignment film)

A glass substrate was used as a support. The following coating liquid P-1 for forming an alignment film was applied onto the support by spin coating. The support on which the coating liquid P-1 for forming an alignment film was coated was dried using a hot plate at 60°C for 60 seconds to form a coating film.

Coating liquid P-1 for forming alignment film

| | |
|---|---|
| · Material for photo alignment shown below | 1.00 part by mass |
| · Water | 16.00 parts by mass |
| · Butoxyethanol | 42.00 parts by mass |
| · Propylene glycol monomethyl ether | 42.00 parts by mass |

Material for photo alignment

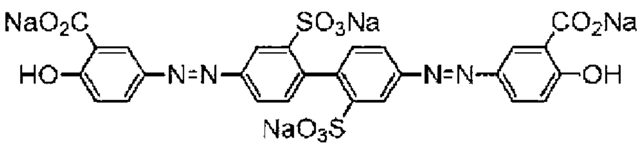

(Production of photo-alignment film)

The obtained coating film was exposed to form a photo-alignment film P-1 having a film thickness of 5 μm.

Next, a composition B-3 was applied once onto the photo-alignment film P-1 to produce an optically anisotropic layer.

Composition B-3 (coating liquid for forming cholesteric liquid crystal layer)

| | |
|---|---|
| · Rod-like liquid crystal compound L-13 shown above | 100.00 parts by mass |
| · Polymerization initiator (manufactured by BASF, Irgacure OXE01) | 1.00 part by mass |
| · Chiral agent Ch-1 shown below | 4.2 parts by mass |
| · Methyl ethyl ketone | 115.72 parts by mass |

Rod-like liquid crystal compound L-13 (including the following structures at a mass ratio shown on the right side)

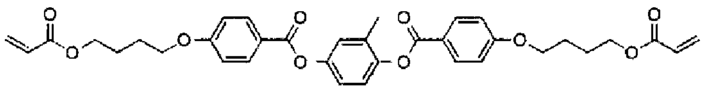
84%

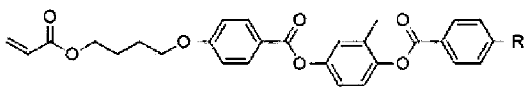
14%

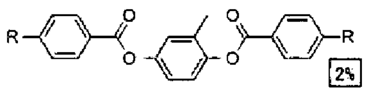
2%

R:
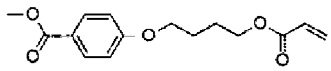

Chiral agent Ch-1

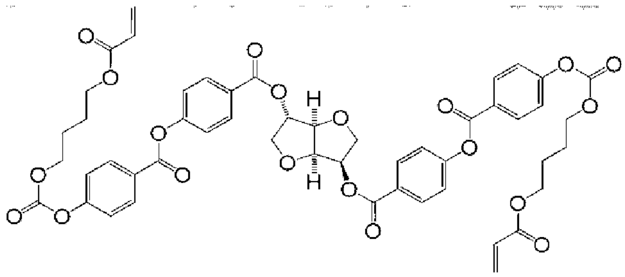

The optically anisotropic layer was produced as follows.

First, the composition B-1 was applied onto the photo-alignment film P-1 to form one layer, and the coating film was heated to 80°C on a hot plate. Thereafter, at 80°C, the coating film was irradiated with ultraviolet rays having a wavelength of 365 nm at an irradiated amount of 300 mJ/cm$^2$ using a high-pressure mercury lamp in a nitrogen atmosphere, thereby fixing an alignment of the liquid crystal compound to produce an optically anisotropic layer.

It was finally confirmed with a polarizing microscope that the optically anisotropic layer had $\Delta n_{940} \times$ thickness d = Re(940) of 470 nm.

The laminate including the produced optically anisotropic layer was a circular polarizing plate having a reflective cholesteric liquid crystal layer. The circular polarizing plate was of a reflective type, and reflected and diffracted right circularly polarized light having a wavelength of 940 nm. In a case where light was incident perpendicularly to the surface of the optically anisotropic layer, the circular polarizing plate reflected the right circularly polarized light in a direction at a polar angle of 30° and transmitted the left circularly polarized light in a direction at 0° without diffraction.

(Comparative Example 1)

Comparative Example 1 was the same as Example 2, except that the position of the second polarizing filter was the target object side position, that is, the target object 13 side of the lens 20 shown in FIG. 1.

(Comparative Example 2)

Comparative Example 2 was the same as Example 6, except that the position of the second polarizing filter was the target object side position, that is, the target object 13 side of the lens 20 shown in FIG. 1.

(Measurement of haze)

Absorption anisotropy of the light absorption anisotropic films 1 and 2 produced as the second polarizing filters was measured using a haze meter (NDH2000 (manufactured by Nippon Denshoku Industries Co., Ltd.)).

(Evaluation of noise of captured image)

The noise of the captured image was evaluated as follows.

A mirror 50 was disposed at a position facing the imaging systems of Examples 1 to 11 and Comparative Examples 1 and 2 as shown in FIG. 17, a mirror 52 was installed at an oblique position, and reflected light from the mirror surface, which was noise, was imaged. The lenses 20 and 22 (see FIG. 1) were arranged such that the optical axis C (see FIG. 1) was perpendicular to a front surface 50a of the mirror 50. The lenses 20 and 22 were arranged such that the optical axis C was inclined with respect to a front surface 52a of the mirror 52.

The captured image was obtained by adjusting a shutter speed such that the maximum brightness value in the image was constant in the imaging systems of Examples 1 to 11 and Comparative Examples 1 and 2 with the disposition of the mirrors 50 and 52 shown in FIG. 17. An average brightness of the captured image was evaluated, and the noise of the captured image of the imaging system was evaluated in terms of a relative value to the evaluation value (average brightness value) in Example 1. The results are shown in the column of "Relative average brightness value" in Table 1. In Example 1, the relative average brightness value was "1". The smaller the value of the relative average brightness, the less the noise.

In addition, the captured image was evaluated according to the following evaluation standards, and the noise of the captured image of the imaging system was evaluated. The results are also shown. Specifically, 10 testers evaluated each captured image according to the following A to D. As a result, the evaluation of the captured image was set to the evaluation given by 8 or more of the 10 testers.

Evaluation Standard

A: no noise was detected in the captured image.
B: slight noise was detected in the captured image.
C: noise was detected in the captured image, but the noise was not noticeable.
D: noise was clearly detected in the captured image.

In Examples 1 to 11 and Comparative Examples 1 and 2, the average transmittance of the second polarizing filter was measured. The results are shown in Table 1. Since the second polarizing filter in each case was the linear polarizer or included the linear polarizer, "Average transmittance of second linear polarizer" is used in Table 1.

The average transmittance of the second polarizing filter (second linear polarizer) was measured as follows. First, a transmittance at a wavelength of 400 nm or more and less than 700 nm was measured using an ultraviolet-visible-near infrared spectrophotometer V-660 (JASCO Corporation). Next, an average transmittance (unit: %) of the second polarizing filter (second linear polarizer) was calculated by arithmetically averaging the transmittances at the obtained wavelengths.

[Table 1]

| | Second polarizing filter | Position of second polarizing filter | Haze of second polarizing filter | Average transmittance of second polarizing filter | Relative average brightness value | Haze |
|---|---|---|---|---|---|---|
| Example 1 | LCF | Pupil position | 0.8 | 92% | 1 | A |
| Example 2 | Light absorption anisotropic film 1 | Pupil position | 0.8 | 93% | 1.3 | B |
| Example 3 | LCF | Image side position | 0.8 | 92% | 1.1 | A |
| Example 4 | Light absorption anisotropic film 1 | Image side position | 0.8 | 93% | 1.4 | B |
| Example 5 | WG + louver | Pupil position | 0.8 | 45% | 1.5 | C |
| Example 6 | WG | Pupil position | 0.8 | 45% | 1.6 | C |
| Example 7 | WG | Image side position | 0.8 | 45% | 1.7 | C |
| Example 8 | Light absorption anisotropic film 2 | Image side position | 3 | 93% | 1.8 | C |
| Example 9 | LCF | Target object side position | 0.8 | 92% | 1.4 | B |
| Example 10 | Circular polarizing plate | Target object side position | 0.9 | 92% | 1.0 | A |
| Example 11 | Circular polarizing plate | Target object side position | 0.5 | 95% | 1.1 | A |
| Comparative Example 1 | Light absorption anisotropic film 1 | Target object side position | 0.8 | 93% | 2 | D |
| Comparative Example 2 | WG | Target object side position | 0.8 | 45% | 2.1 | D |

As shown in Table 1, in Examples 1 to 11, the relative average brightness value was smaller than that in

Comparative Examples 1 and 2, and a captured image with reduced noise was obtained. The relative average brightness value and the sensory evaluation of the noise corresponded to each other.

From Examples 1 to 11, regardless of the position of the second polarizing filter, the LCF was most effective in reducing the noise among the light absorption anisotropic film 1, the light absorption anisotropic film 2, the wire grid polarizer, the combination of the wire grid polarizer and the louver, and the LCF.

From Examples 1 to 11, the absorption type of the second polarizing filter was more effective in reducing the noise than the reflective type of the second polarizing filter.

From Examples 4 and 8, the second polarizing filter with a small haze was more effective in reducing the noise.

In addition, from Examples 1 to 7, the second linear polarizer with an average transmittance of visible light of 70% or more was more effective in reducing the noise.

In a case where the second polarizing filter was disposed on the target object side as in Example 9, the obliquely incident component increased, but the relative average brightness value and the noise were average values of Examples 1 to 11.

In addition, even in a case where the second polarizing filter (second circular polarizing filter) had a configuration of including a linear polarizer and a λ/4 plate and was disposed on the target object side as in Example 10, the same results as in Examples 1 and 3 were obtained.

In addition, even in a case where the second polarizing filter (second circular polarizing filter) had a configuration of including a cholesteric liquid crystal layer and was disposed on the target object side as in Example 11, the same results as in Examples 1 and 3 were obtained.

## Explanation of References

10, 46: imaging system
12: light source
13: target object
14: imaging device
16: first polarizing filter
16a, 34a, 36a, 50a, 52a, 60a, 62a: front surface
16b, 24b, 32b, 36b, 60b, 62b: back surface
17: display control unit
18: controller
19: display unit
20, 22: lens
24: second polarizing filter
26: image sensor
27: optical system
28: first linear polarizer
29: second linear polarizer
30: second polarizing filter
32: first layer
34: second layer
36: second polarizing filter
40: vehicle
42: seat
43: driver
44: passenger
48: calculation unit
50, 52: mirror
60: first circular polarizing filter
62: second circular polarizing filter
63, 65: linear polarizer
64, 66: λ/4 plate
C: optical axis
D1, D2: polarization axis
Li: reflected light
Lo: emitted light

S: stray light
X, Y, Z: direction

## Claims

1. An imaging system comprising:

   a light source which emits infrared rays;
   an imaging device which images a target object irradiated with the infrared rays emitted from the light source; and
   a first polarizing filter which is provided between the light source and the target object and polarizes the infrared rays emitted from the light source,
   wherein the imaging device includes, from an incidence side, a lens, a second polarizing filter which polarizes the infrared rays, and an image sensor.

2. The imaging system according to claim 1,

   wherein the first polarizing filter includes a first linear polarizer,
   the second polarizing filter includes a second linear polarizer, and
   a polarization axis of the first linear polarizer and a polarization axis of the second linear polarizer are orthogonal to each other.

3. The imaging system according to claim 2,
   wherein the second linear polarizer is an absorption type linear polarizer.

4. The imaging system according to claim 2 or 3,
   wherein the second linear polarizer has an average transmittance of visible light of 70% or more.

5. The imaging system according to claim 1,
   wherein the second polarizing filter is an optical element which has an absorption axis with respect to infrared rays in an in-plane direction, in which, in a case where linearly polarized light of the infrared rays orthogonal to the absorption axis is irradiated from a normal direction of the optical element and from a direction tilted by 45° from the normal direction at an azimuthal angle orthogonal to the absorption axis, an absorbance in a case of being irradiated from the direction tilted by 45° from the normal direction is larger than an absorbance in a case of being irradiated from the normal direction.

6. The imaging system according to any one of claims 1, 2, and 5,
   wherein the second polarizing filter has a haze of 1 or less.

7. The imaging system according to any one of claims 1 to 3,

   wherein the target object is at least one of a driver of a vehicle or a passenger of the vehicle, and
   the imaging system is used for an in-vehicle occupant monitoring system.

8. An imaging system comprising:

   a light source which emits infrared rays;
   an imaging device which images a target object irradiated with the infrared rays emitted from the light source; and
   a first polarizing filter which is provided between the light source and the target object and polarizes the infrared rays emitted from the light source,
   wherein the imaging device includes, from an incidence side, a lens, a second polarizing filter which polarizes the infrared rays, and an image sensor, and
   the second polarizing filter is an optical element which has an absorption axis with respect to infrared rays in an in-plane direction, in which, in a case where linearly polarized light of the infrared rays orthogonal to the absorption axis is irradiated from a normal direction of the optical element and from a direction tilted by 45° from the normal direction at an azimuthal angle orthogonal to the absorption axis, an absorbance in a case of being irradiated from the direction tilted by 45° from the normal direction is larger than an absorbance in a case of being irradiated from the normal direction.

**9.** An imaging system comprising:

a light source which emits infrared rays;
an imaging device which images a target object irradiated with the infrared rays emitted from the light source; and
a first circular polarizing filter which is provided between the light source and the target object and circularly polarizes the infrared rays emitted from the light source,
wherein the imaging device includes, from an incidence side, a second circular polarizing filter which circularly polarizes the infrared rays, a lens, and an image sensor.

**10.** The imaging system according to claim 9,

wherein the second circular polarizing filter includes a linear polarizer and a $\lambda/4$ plate, and
an Nz factor of the $\lambda/4$ plate is more than 0 and less than 1.

**11.** The imaging system according to claim 10,
wherein the linear polarizer of the second circular polarizing filter is an absorption type linear polarizer.

**12.** The imaging system according to claim 10 or 11,
wherein the linear polarizer of the second circular polarizing filter has an average transmittance of visible light of 70% or more.

**13.** The imaging system according to claim 9,
wherein the second circular polarizing filter has a haze of 1 or less.

FIG. 1

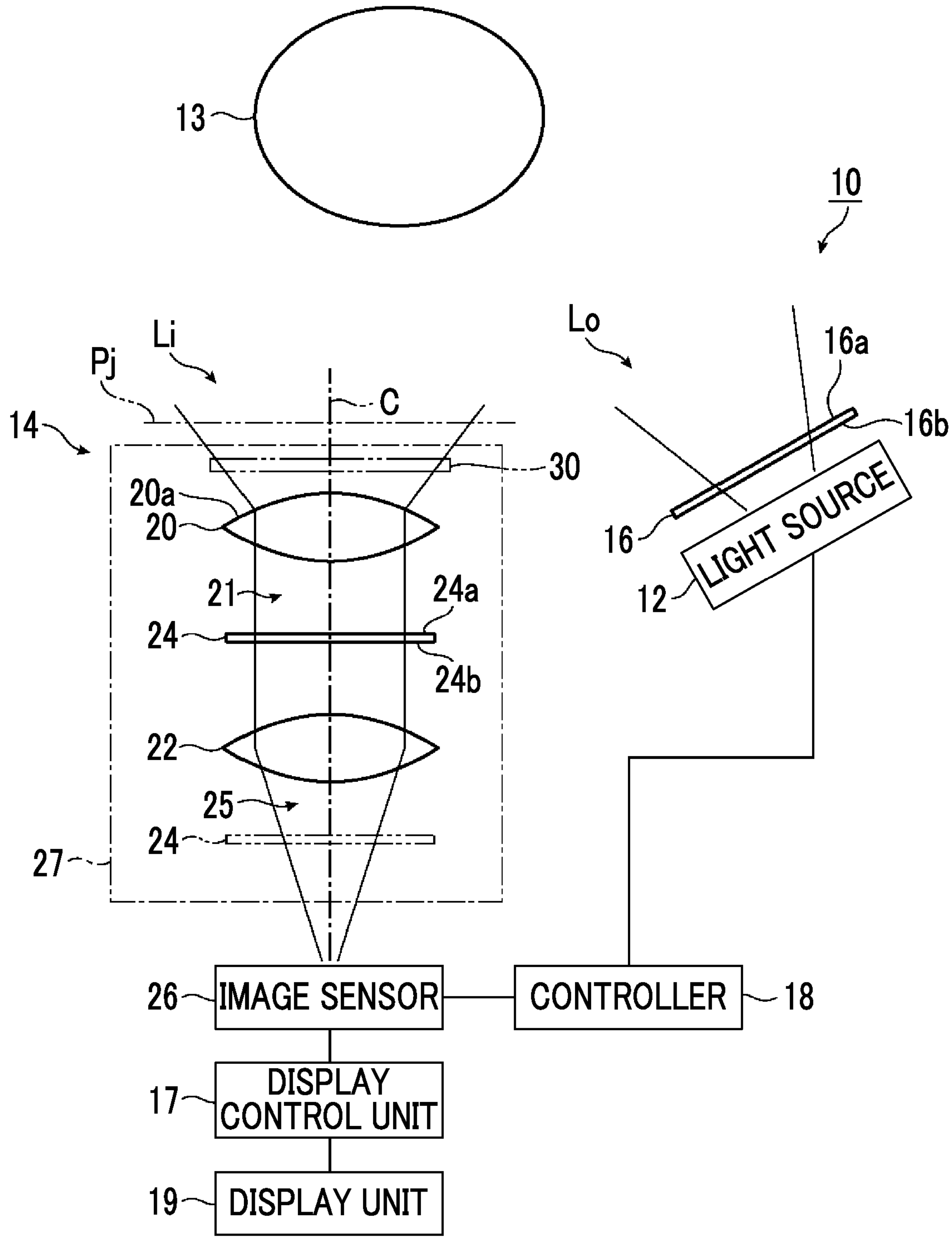
13
10
Li
Lo
Pj
C
14
30
20a
20
21
24a
24
24b
22
25
24
27
16a
16b
16
LIGHT SOURCE
12
26
IMAGE SENSOR
CONTROLLER
18
17
DISPLAY CONTROL UNIT
19
DISPLAY UNIT

FIG. 2

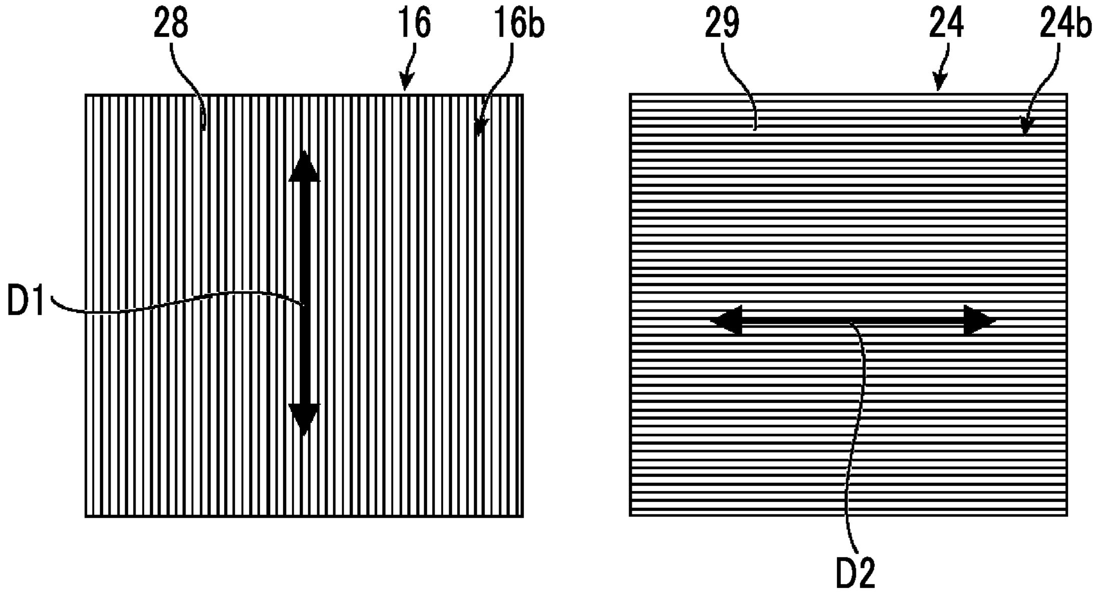


FIG. 3

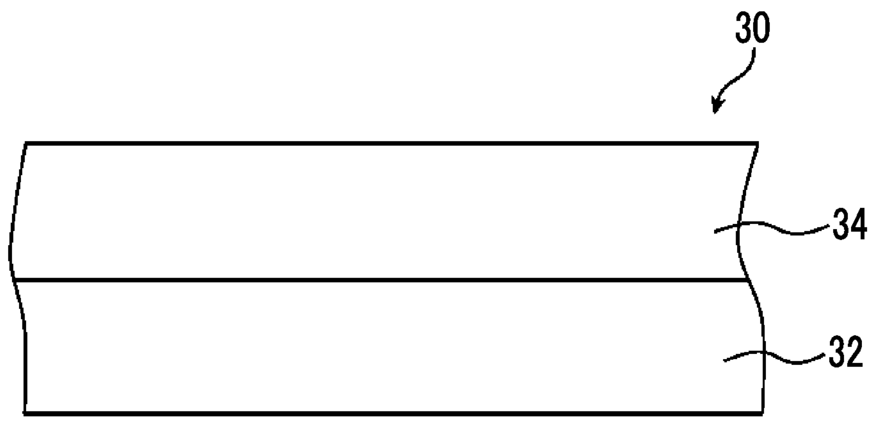


FIG. 4

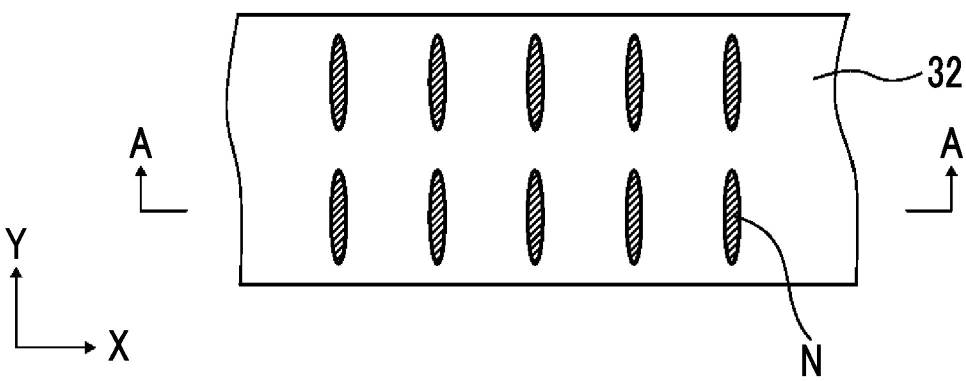

FIG. 5

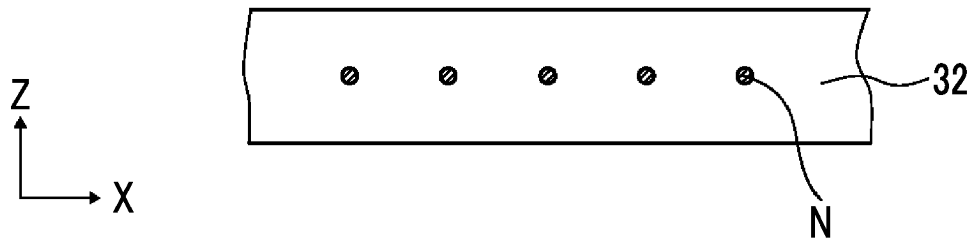


FIG. 6

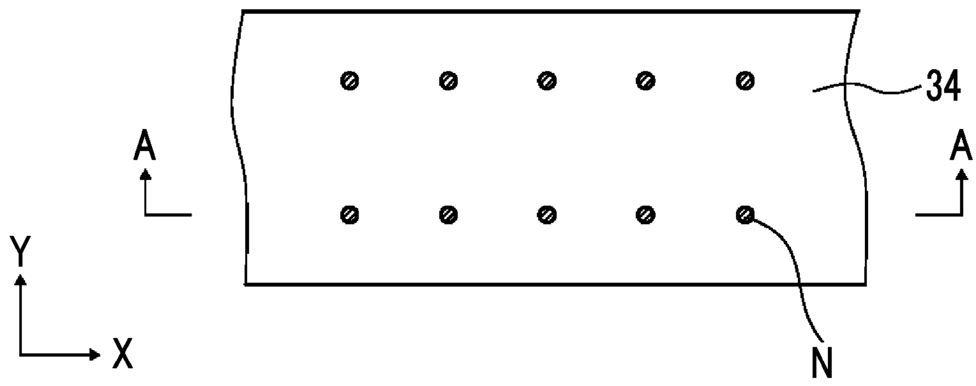


FIG. 7

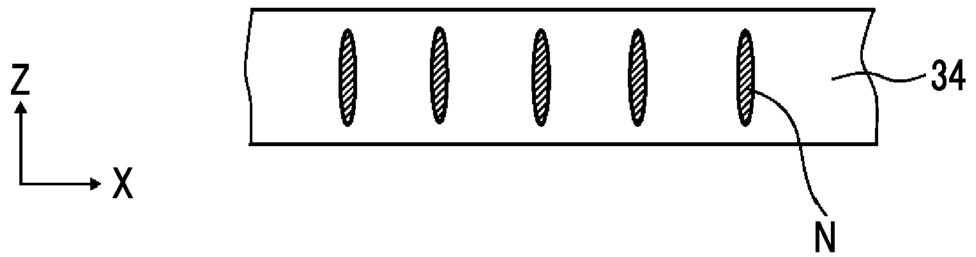

FIG. 8

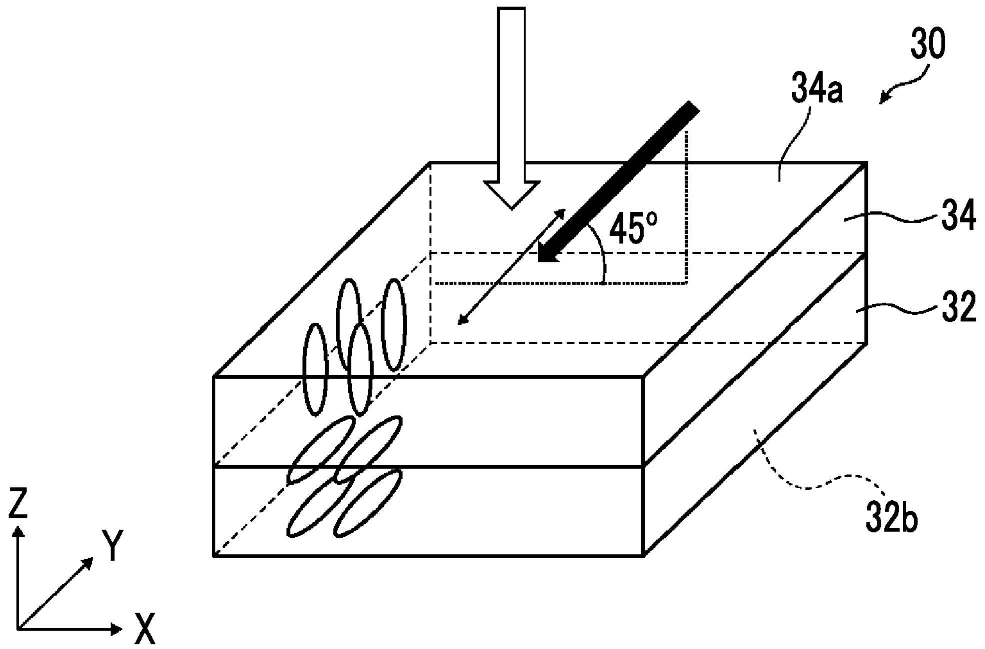


FIG. 9

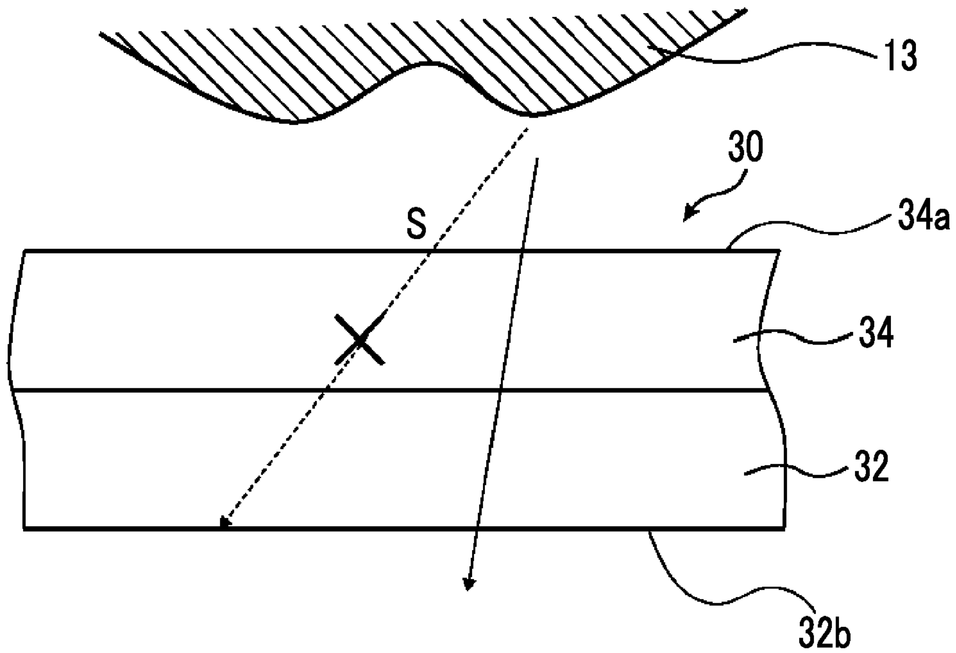

FIG. 10

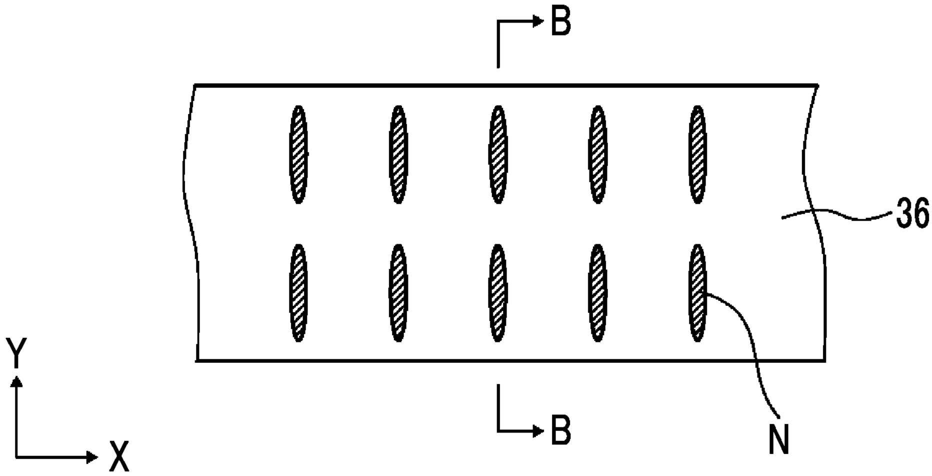


FIG. 11

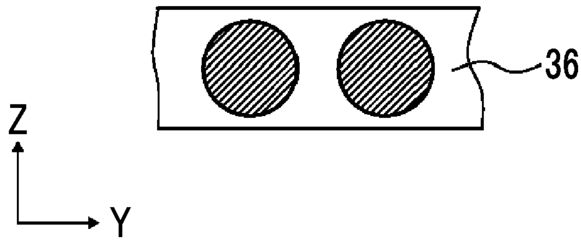


FIG. 12

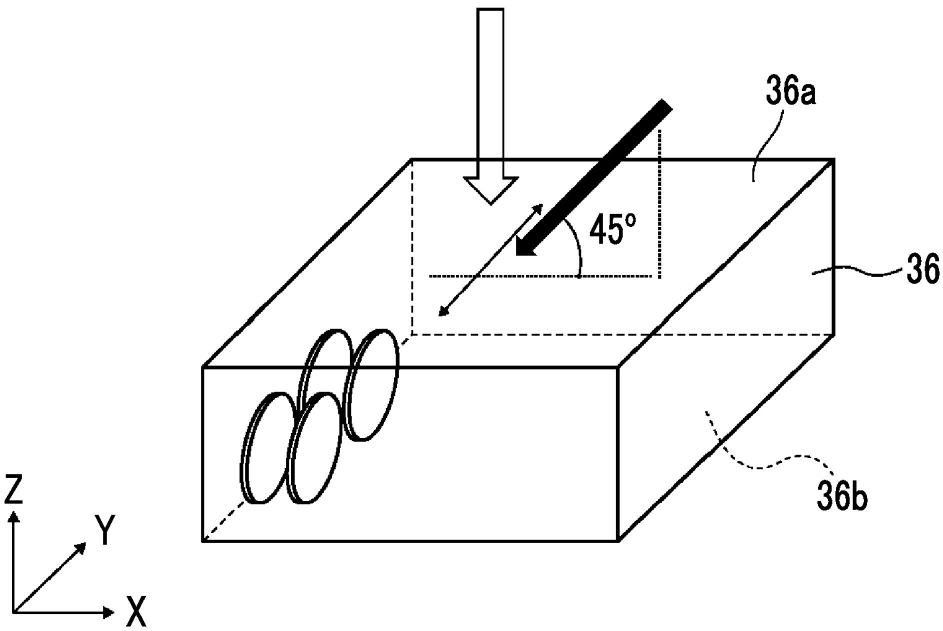

FIG. 13

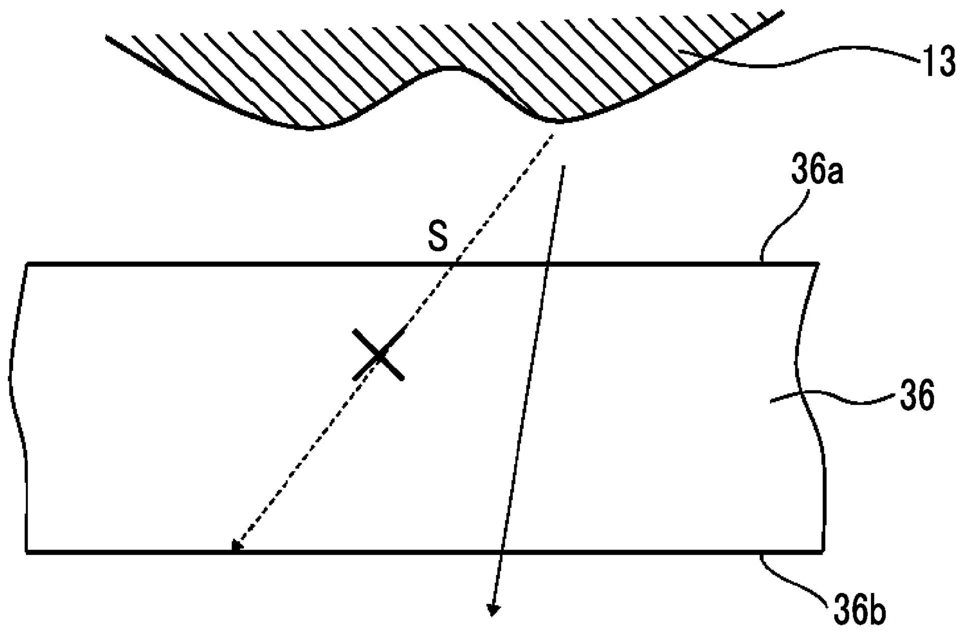

FIG. 14

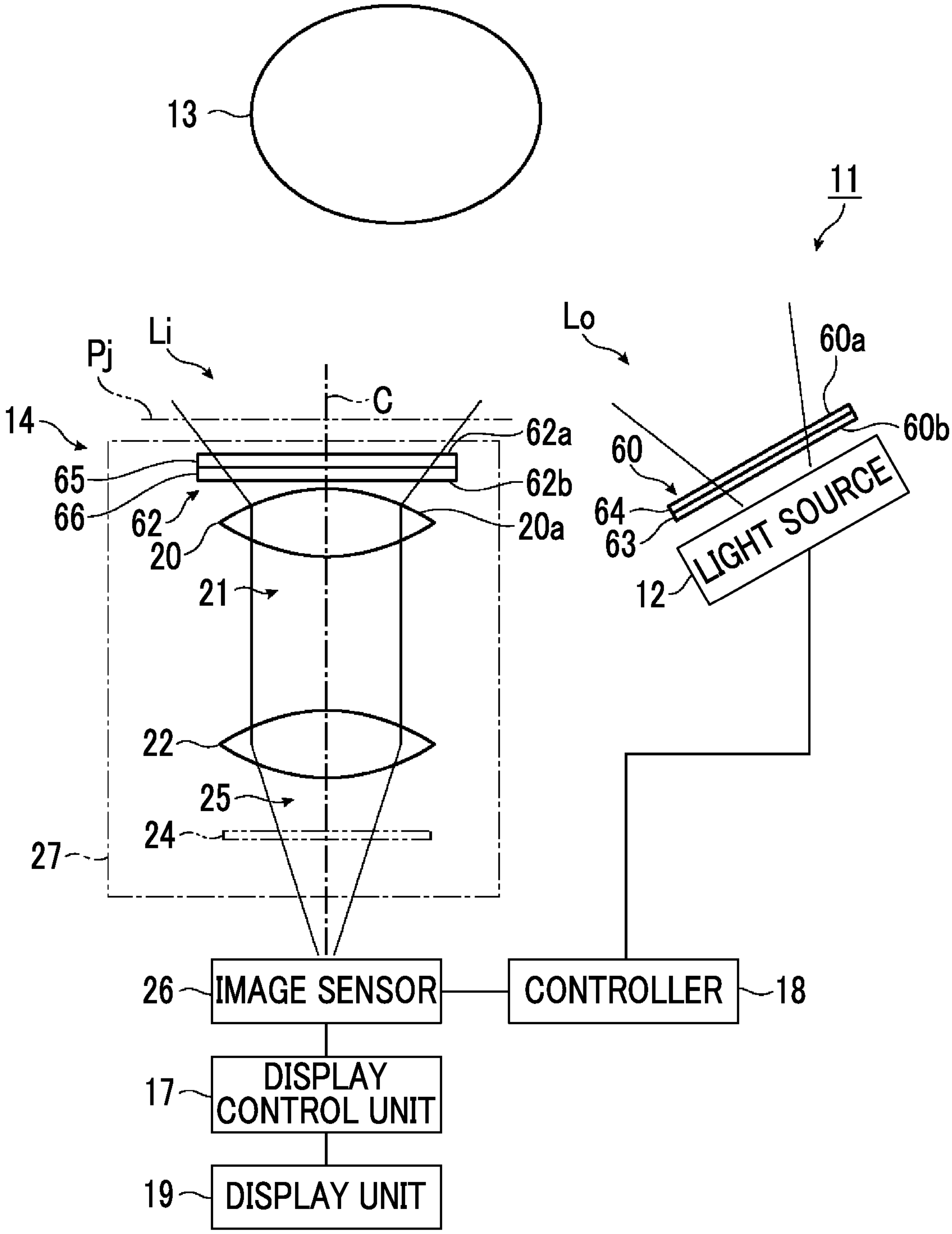
13
11
Lo
Li
Pj
C
60a
14
62a
60b
60
65
62b
64
66
62
20a
63
20
LIGHT SOURCE
21
12
22
25
24
27
26
IMAGE SENSOR
CONTROLLER
18
17
DISPLAY
CONTROL UNIT
19
DISPLAY UNIT

FIG. 15

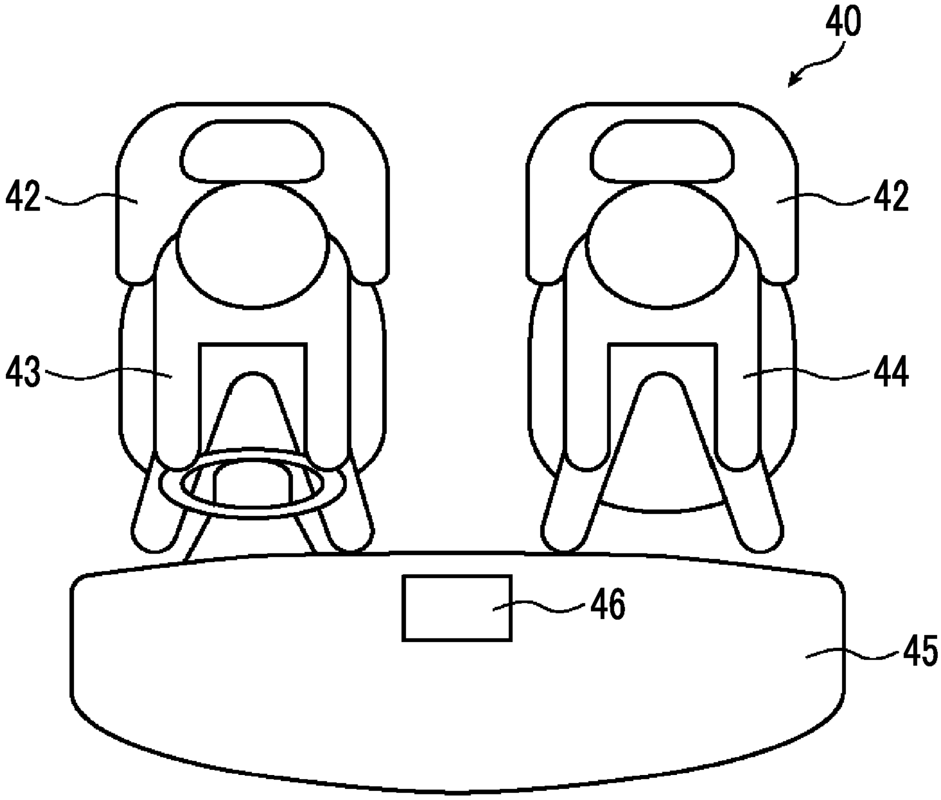

FIG. 16

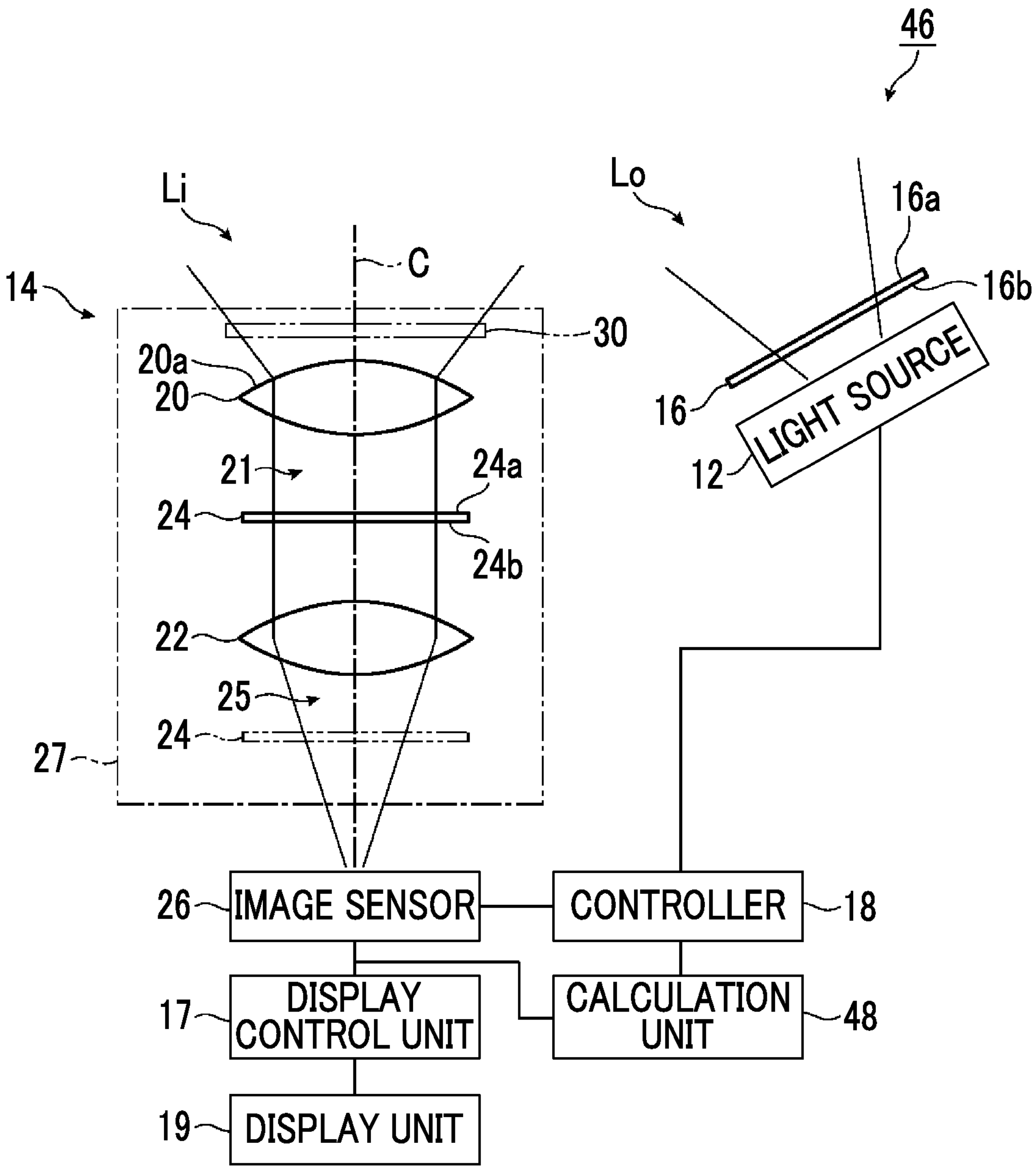
46
Li
Lo
16a
C
16b
14
30
20a
20
LIGHT SOURCE
16
21
24a
12
24
24b
22
25
24
27
26
IMAGE SENSOR
CONTROLLER
18
DISPLAY
CONTROL UNIT
17
CALCULATION
UNIT
48
19
DISPLAY UNIT

FIG. 17

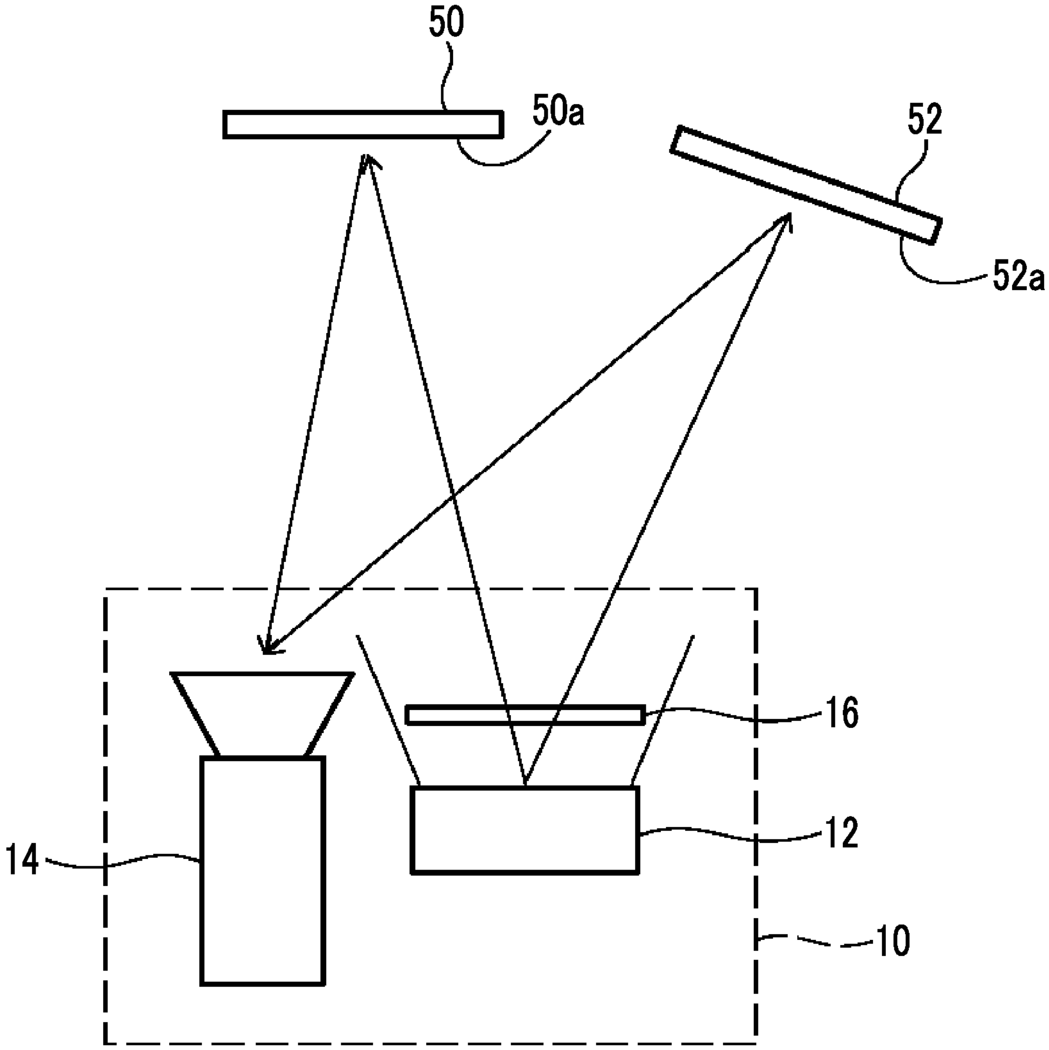

## INTERNATIONAL SEARCH REPORT

International application No. **PCT/JP2024/032347**

**A. CLASSIFICATION OF SUBJECT MATTER**

***H04N 23/55***(2023.01)i; ***G01N 21/17***(2006.01)i; ***G02B 5/30***(2006.01)i
FI: H04N23/55; G01N21/17 A; G02B5/30

According to International Patent Classification (IPC) or to both national classification and IPC

**B. FIELDS SEARCHED**

Minimum documentation searched (classification system followed by classification symbols)

H04N23/55; G01N21/17; G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-123858 A (SEEING MACHINES LTD.) 24 August 2022 (2022-08-24) paragraphs [0073]-[0086], fig. 10-11 | 1-3, 7, 9, 11 |
| Y | paragraphs [0073]-[0086], fig. 10-11 | 4-6, 8, 10, 12-13 |
| Y | JP 2011-048310 A (FUJIFILM CORPORATION) 10 March 2011 (2011-03-10) paragraph [0040] | 4, 12 |
| Y | JP 2008-275976 A (FUJIFILM CORPORATION) 13 November 2008 (2008-11-13) paragraph [0113] | 4, 12 |
| Y | WO 2022/210850 A1 (FUJIFILM CORPORATION) 06 October 2022 (2022-10-06) paragraph [0007] | 5, 8 |
| Y | JP 2009-145776 A (NITTO DENKO CORPORATION) 02 July 2009 (2009-07-02) paragraph [0044] | 5, 8 |
| Y | WO 2022/215757 A1 (FUJIFILM CORPORATION) 13 October 2022 (2022-10-13) paragraph [0130] | 6, 13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/032347**

**C. DOCUMENTS CONSIDERED TO BE RELEVANT**

| Category* | Citation of document, with indication, where appropriate, of the relevant passages | Relevant to claim No. |
|---|---|---|
| Y | WO 2016/052360 A1 (FUJIFILM CORPORATION) 07 April 2016 (2016-04-07)<br>paragraph [0048] | 10 |
| Y | WO 2021/166942 A1 (FUJIFILM CORPORATION) 26 August 2021 (2021-08-26)<br>paragraphs [0074]-[0075] | 10 |
| A | US 2017/0230551 A1 (MICROSOFT TECHNOLOGY LICENSING, LLC.) 10 August 2017 (2017-08-10)<br>the whole document, fig. 1-8 | 1-13 |

Form PCT/ISA/210 (second sheet) (July 2022)

**INTERNATIONAL SEARCH REPORT**
**Information on patent family members**

International application No.
**PCT/JP2024/032347**

| Patent document cited in search report | Publication date (day/month/year) | Patent family member(s) | Publication date (day/month/year) |
|---|---|---|---|
| JP 2022-123858 A | 24 August 2022 | US 2022/0252924 A1<br>paragraphs [0119]-[0135], fig. 10-11<br>EP 4060978 A1 | |
| JP 2011-048310 A | 10 March 2011 | US 2011/0051052 A1<br>paragraph [0097]<br>EP 2293122 A2<br>CN 102004278 A | |
| JP 2008-275976 A | 13 November 2008 | (Family: none) | |
| WO 2022/210850 A1 | 06 October 2022 | US 2024/0021012 A1<br>paragraph [0013] | |
| JP 2009-145776 A | 02 July 2009 | US 2009/0153783 A1<br>paragraph [0061] | |
| WO 2022/215757 A1 | 13 October 2022 | US 2024/0142682 A1<br>paragraph [0312]<br>CN 117396784 A | |
| WO 2016/052360 A1 | 07 April 2016 | US 2017/0192145 A1<br>paragraphs [0117]-[0118] | |
| WO 2021/166942 A1 | 26 August 2021 | (Family: none) | |
| US 2017/0230551 A1 | 10 August 2017 | WO 2017/139143 A1<br>EP 3414897 A1<br>CN 108605117 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022123858 A
- JP 1999513019 A
- JP H11513019 A
- JP 2005289980 A
- JP 2007108732 A
- JP 2010244038 A
- WO 2022215757 A
- JP 9506837 A
- JP H9506837 A
- JP 59083951 A
- JP 2248341 A
- JP H2248341 A
- JP 2003139951 A
- US 2445555 A
- JP 11172252 A
- JP H11172252 A
- JP 8067822 A
- JP H8067822 A
- JP 62129380 A
- JP H62129380 A
- JP 2002241758 A
- JP 2002090547 A
- JP 2002090526 A
- JP 63033477 A
- JP 2002296423 A
- JP 2001330725 A
- JP 2003295212 A
- JP 2015227955 A


### Non-patent literature cited in the description


- **MASAO DOI**. Polymer Physics-Phase Transition Dynamics. Iwanami Shoten, 1992, 2
- Handbook of Chemistry. MARUZEN, 1993
- **N. E. KAGEN et al.** *J. Amer. Chem. Soc.*, 1977, vol. 99, 5484
- **NAGAO KOBAYASHI**. New Developments in Organic Phthalocyanines. *Materials for the 28th Organic Device Research Meeting*, 1
- **P. A. STUZHIN et al.** *Inog. Chem.*, 1988, vol. 37, 2655
- **DANEL S. DANIEL**. Chemistry and application of leuco dyes. Plenium Press, 1997, 207
- **I. J. FLETCHER**. Chemistry and application of leuco dyes. Plenium Press, 1997, 97
- Lange's Handbook of Chemistry. McGraw-Hill, 1979
- Chemistry Region. Nankodo, Co., Ltd., 1979, 96-103
- *Chem. Rev.*, 1991, vol. 91, 165-195